# EUROPÄISCHE PATENTSCHRIFT

(11) **EP 3 877 438 B1**
(45) Veröffentlichungstag und Bekanntmachung des Hinweises auf die Patenterteilung: **14.06.2023**
(21) Anmeldenummer: 19797739.0
(22) Anmeldetag: 06.11.2019
(51) Int. Cl.: C08G 18/50, C08G 64/18, C08G 64/30, C08G 71/04, C08G 18/46, C09J 175/04

(54) **VERFAHREN ZUR HERSTELLUNG VON SILANMODIFIZIERTEN POLYMEREN**
METHOD FOR THE PREPARATION OF SILANE-MODIFIED POLYMERS
PROCÉDÉ DE FABRICATION DE POLYMÈRES MODIFIES PAR UN SILANE

(30) Priorität: 07.11.2018 EP 18204858
(43) Veröffentlichungstag der Anmeldung: 15.09.2021
(73) Patentinhaber: merz+benteli ag, 3172 Niederwangen (CH)
(72) Erfinder: HUBER, Stefan, 4900 Langenthal (CH); ZUBER, Thomas, 3504 Niederhünigen (CH); BURKHARDT, Fritz, 3414 Oberburg (CH); LERF, Claude, 3280 Meyriez (CH)
(74) Vertreter: Schaad, Balass, Menzl & Partner AG
(86) Internationale Anmeldenummer: PCT/EP2019/080326
(87) Internationale Veröffentlichungsnummer: WO 2020/094685

(56) Entgegenhaltungen:
- WO-A1-2018/042030
- US-A1- 2006 247 407

## Beschreibung

Die Erfindung betrifft ein Verfahren zur Herstellung eines Alkoxysilan-Polymers über ein Carbamat-, Thiocarbonat- oder Carbonat-terminiertes Präpolymer, das mit hoher Ausbeute hergestellt werden kann.

Silanmodifizierte Polymere (SMP) sind dem Fachmann schon seit geraumer Zeit bekannt. Besagte Verbindungen stellen in der Regel feuchtigkeitsreaktive Polymere dar und kommen insbesondere in feuchtigkeitshärtenden Dicht- oder Klebstoffen zur Anwendung.

Allen silanmodifizierten Polymeren ist gemeinsam, dass sie nebst einem organischen Polymer-Rückgrat (auch "Backbone" genannt) mindestens eine hydrolisierbare Silylgruppe aufweisen, die über entsprechende Bindegruppen ("coupling groups") an die Polymerkette gebunden ist.

Mit den gängigen Verfahren zur Herstellung silanmodifizierter Polymere sind nur eine relativ beschränkte Anzahl an kommerziellen Produkten zugänglich. Je nach Herstellungsart ist die Auswahl möglicher Polymerketten mehr oder weniger stark beschränkt.

Nebst den zu statistisch silylierten Polymeren führenden Copolymerisations-, Pfropfcopolymerisations- und Polyadditions-Reaktionen werden die Polymere auch durch Reaktion einer Isocyanat-Gruppe mit einer Isocyanatreaktiven-Gruppe beschrieben.

In WO 03/018658 wird ein Verfahren beschrieben, in welchem ein Silan mit einer OH-, SH- oder NHR³-Gruppe mit einem isocyanat-terminierten Präpolymer umgesetzt wird.

In EP-A-1371670 wird ein Verfahren beschrieben, in welchem ein Vinylpolymer mit wenigstens einer Hydroxylgruppe mit einer Verbindung umgesetzt wird, die nebst einer Silylgruppe eine Gruppe aufweist, die mit der Hydroxylgruppe reagieren kann. Es wird auch diesbezüglich spezifisch eine Isocyanatgruppe erwähnt.

In EP-A-2341116 wird eine polymere Verbindung umfassend eine Polymerkette und mindestens eine an die Polymerkette gebundene Silylgruppe beschrieben, wobei die Polymerkette und die Silylgruppe durch eine β-Hydroxyamin-Gruppe miteinander verbunden sind. Die als Edukt für die Synthese dieser Polymere verwendeten Amin- oder Epoxy-terminierten Präpolymere sind im grossen Massstab nur beschränkt verfügbar und relativ teuer. Grosstechnisch werden die Edukte als Zusatz in Polymerzusammensetzungen verwendet, nicht aber als Präpolymere für ein eigenständiges Polymer, was ihre Verfügbarkeit stark beeinträchtigt.

In US 2006/0247407 wird ein Verfahren zur Herstellung von Verbindungen mit mindestens einer Harnstoffgruppe und mindestens einer Silylgruppe beschrieben, bei dem als Reaktionspartner eine Verbindung mit mindestens einer Aminogruppe und ein Carbamat umgesetzt werden, wobei mindestens einer der Reaktionspartner eine Silylgruppe trägt.

In WO 2018/042030 wird die Verwendung eines Organocarbonat-modifizierten Präpolymers als Edukt zur Herstellung von isocyanatfreien und isothiocyanatfreien Alkoxysilan-Polymeren beschrieben. Nachteilig an diesem Verfahren sind die geringen Ausbeuten von Alkyl- und Arylterminierten Präpolymeren.

Aufgabe der vorliegenden Erfindung ist es demnach, ein Verfahren zur Herstellung eines Alkoxysilan-Polymers bereitzustellen, bei dem das dazu verwendete Präpolymer in hoher Ausbeute herstellbar ist.

Die Aufgabe wird durch das Verfahren gemäss Anspruch 1 gelöst. Weitere bevorzugte Ausführungsformen sind Gegenstand der abhängigen Ansprüche.

Überraschenderweise wurde festgestellt, dass mit dem erfindungsgemässen Verfahren die Ausbeuten des Alkoxysilan-Polymers signifikant erhöht werden können. Das erfindungsgemässe Verfahren zur Herstellung eines Alkoxysilan-Polymers beinhaltet die Herstellung eines Carbamat-, Thiocarbonat- oder Carbonat-terminierten Präpolymers (IIIa) oder (IIIb), das in hoher Ausbeute herstellbar ist. Das durch das erfindungsgemässe Verfahren erhaltene Alkoxysilan-Polymer weist im wesentlichen dieselbe Viskosität auf wie das zur Herstellung verwendete Amino-, Mercapto- oder Hydroxygruppen terminierte Polymer. Eine mögliche Erklärung dafür könnte sein, dass das erfindungsgemässe Verfahren vorzugsweise bei Raumtemperatur durchgeführt wird. Dadurch kann eine partielle Vorvernetzung weitgehend vermieden werden, was dazu führt, dass das erhaltene Alkoxysilan-Polymer im wesentlichen dieselbe Viskosität aufweist wie das zur Herstellung verwendete Amino-, Mercapto- oder Hydroxygruppen terminierte Polymer. Die Viskosität kann beispielsweise mit einem Haake Rheostress RS6000 gemessen werden, der ein 40mm Kegel/Platte Messsystem aufweist.

Dieses wird durch Umsetzung eines mit wenigstens zwei Amino-, Mercapto- oder Hydroxylgruppen terminierten Polymer-Rückgrats der Formel (I) und eines Chlorameisensäureesters der Formel (IIa) oder eines Pyrocarbonats der Formel (IIb) erhalten: 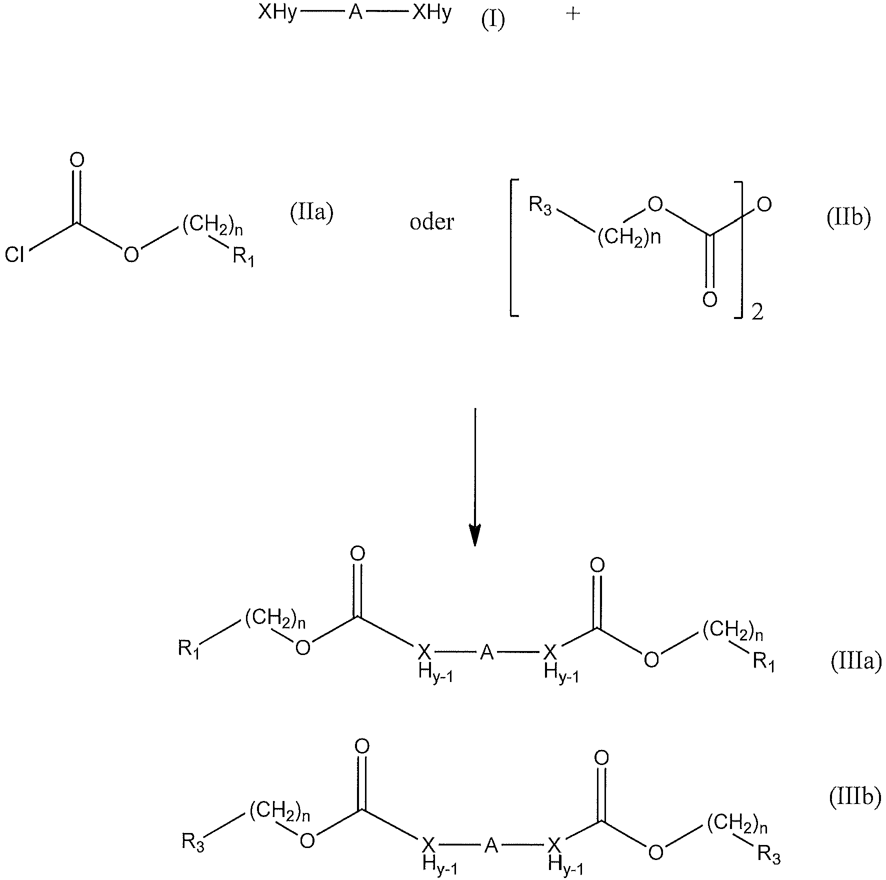
wobei R₁ und R₃ eine lineare oder verzweigte, gesättigte oder ungesättigte Alkyl- oder Alkenylgruppe mit 1 bis 10 Kohlenstoffatomen oder ein mono- oder polycyclisches aliphatisches oder aromatisches Ringsystem mit 5 bis 18 Kohlenstoffatomen im Ringsystem darstellt, das optional durch einen oder mehrere Reste R² substituiert ist, wobei R² ausgewählt ist aus der Gruppe bestehend aus einer linearen oder verzweigten, gesättigten oder ungesättigten Alkyl- oder Alkenylgruppe mit 1 bis 10 Kohlenstoffatomen, einer Nitrogruppe, einer Carbonsäurestergruppe, einer Carbonsäuregruppe, einer Sulfongruppe und einer Halogengruppe, wobei die Halogengruppe vorzugsweise ausgewählt ist aus der Gruppe bestehend aus Cl, F, I und Br,
X ist Sauerstoff, Stickstoff oder Schwefel,
y ist 1, wenn X Sauerstoff oder Schwefel ist und 1 oder 2, wenn X Stickstoff ist,
n im Falle einer linearen oder verzweigten, gesättigten oder ungesättigten Alkyl- oder Alkenylgruppe 0 und im Falle eines mono- oder polycyclischen aliphatisches oder aromatisches Ringsystems 0, 1 oder 2 ist und
A für ein Polymer-Rückgrat steht.

Mit dem erfindungsgemässen Verfahren wird das Präpolymer (III) mit hohen Ausbeuten von über 75% erhalten. Ausserdem kann die Reaktion bei Raumtemperatur durchgeführt werden, was ein ökologischer und ökonomischer Vorteil ist. Des Weiteren treten keine der Stabilität schadenden Nebenprodukte auf.

In einer Ausführungsform wird das Carbamat-, Thiocarbonat- oder Carbonat-terminierten Präpolymers durch Umsetzung eines mit wenigstens zwei Amino-, Mercapto- oder Hydroxylgruppen terminierten Polymer-Rückgrats der Formel (I) und eines Chlorameisensäureesters der Formel (IIa) erhalten.Das so erhaltene erfindungsgemässe Präpolymer kann kostengünsting und mit grosser Ausbeute hergestellt werden.

In einer anderen Ausführungsform wird das Carbamat-, Thiocarbonat- oder Carbonat-terminierten Präpolymers durch Umsetzung eines mit wenigstens zwei Amino-, Mercapto- oder Hydroxylgruppen terminierten Polymer-Rückgrats der Formel (I) und eines Pyrocarbonats der Formel (IIb) erhalten.

Vorzugsweise wird der erste Reaktionsschritt des erfindungsgemässen Verfahrens in Abwesenheit eines ersten Katalysators I durchgeführt. Unter einem ersten Katalysator I wird ein Katalysator für den ersten Reaktionsschritt verstanden. Dabei handelt es sich um eine Verbindung, die nur die Reaktion katalysiert, aber nicht als Säurefänger agiert. Amine, die als Säurefänger dienen, fallen nicht unter den Begriff erster Katalysator I, da sie primär als Säurefänger dienen. Mögliche Amine, die keine ersten Katalysatoren (I) im Sinne der vorliegenden Erfindung sind, sind bespielsweise TEA (Triethylamin), andere Amine oder cycloaromatische Amine.

Es wurde nämlich festgestellt, dass viele Katalysatoren, die typischerweise bei der Herstellung von Carbamat-, Thiocarbonat- oder Carbonat-terminierten Präpolymeren eingesetzt werden, die nachfolgende Umsetzung zu Alkoxysilan-Polymeren negativ beeinflussen und beispielsweise insbesondere bei Polymeren mit Esterverbindungen zu einem Abbau der Polymerketten führen. Durch die Abwesenheit des ersten Katalysators (I) im ersten Reaktionsschritt, kann beim anschliessenden Reaktionsschritt, der Umsetzung mit einem Alkoxysilan, eine partielle Vernetzung der Alkoxysilan-Polymere im Wesentlichen verhindert werden.

Vorzugsweise werden beide Reaktionsschritte in Abwesenheit eines Katalysators durchgeführt. Bei Carbonat-terminierten Polymeren werden vorzugsweise beide Reaktionsschritte in Abwesenheit eines Katalysators durchgeführt. Bei Carbamatterminierten Polymeren kann die Verwendung eines Katalysators für den zweiten Reaktionsschritt, aufgrund der langen Reaktionsdauer von mehreren Tagen bei dessen Abwesenheit, hilfreich sein.

In einer Ausführungsform stellt R¹ im Chlorameisensäureester der Formel (IIa) ein mono- oder polycyclisches aliphatisches Ringsystem mit 5 bis 18 Kohlenstoffatomen im Ringsystem dar, das durch einen oder mehrere Reste R² substituiert sein kann, wobei n vorzugsweise 0 oder 1 und am bevorzugtesten 0 ist. R² ist vorzugsweise ausgewählt aus der Gruppe bestehend aus einer linearen oder verzweigten, gesättigten oder ungesättigten Alkyl- oder Alkenylgruppe mit 1 bis 10 Kohlenstoffatomen, einer Nitrogruppe, einer Carbonsäurestergruppe, einer Carbonsäuregruppe, einer Sulfongruppe und einer Halogengruppe, wobei die Halogengruppe vorzugsweise ausgewählt ist aus der Gruppe bestehend aus Cl, F, I und Br. Mögliche mono- oder polycyclische aliphatische Ringsysteme sind beispielsweise Cyclopentyl, Cyclohexyl oder Cycloheptyl.

Vorzugsweise ist R¹ im Chlorameisensäureester der Formel (IIa) ein mono- oder polycyclisches aromatisches Ringsystem mit 6 bis 18 Kohlenstoffatomen im Ringsystem, da gerade diese Präpolymere mit sehr hoher Ausbeute hergestellt werden können. Vorzugsweise ist das Ringsystem nicht substituiert, da nicht substituierte Ringsysteme kostengünstiger sind. Substituierte Ringsysteme weisen allerdings jeweils eine höhere Reaktivität auf. Besonders bevorzugt ist R¹ ein Ringsystem, das ausgewählt ist aus der Gruppe bestehend aus Phenyl, 4-Nitrophenyl, 4-Methoxyphenyl, 4-Methoxycarbonylphenyl, 1-Naphthyl, 4-Nitro-1-Naphthyl, 4-Methoxy-1-Naphthyl, 4-Methoxycarbonyl-1-Naphthyl,2-Naphthyl, 1-Anthryl, 2-Anthryl, 9-Anthryl, 1-Phenanthryl und 9-Phenanthryl und n ist 0 oder 1. Besonders bevorzugt ist R¹ Phenyl, 4-Nitrophenyl oder 4-Methoxyphenyl und n ist 0 oder 1, d.h., der Chlorameisensäureester der Formel (IIa) ist besonders bevorzugt ausgewählt aus der Gruppe bestehend aus Phenylchloroformat, 4-Nitrophenylchlorophormat, 4-Methoxyphenylchloroformat, Benzylchloroformat, 4-Nitrobenzylchlorophormat und 4-Methoxybenzylchloroformat.

R¹ kann alternativ auch eine Alkylgruppe ausgewählt aus der Gruppe bestehend aus Methyl, Ethyl, Propyl, iso-Propyl, n-Butyl, iso-Butyl, tert-Butyl, n-Pentyl, iso-Pentyl, n-Hexyl, n-Heptyl, n-Octyl, n-Nonyl und n-Decyl sein. Besonders bevorzugt ist R¹ iso-Butyl.

Besonders bevorzugt sind die Chlorameisensäureester Benzyloxycarbonylchlorid, da dieses kommerziell erhältliche Edukt mit hoher Ausbeute zu Präpolymeren der allgemeinen Formel (III) führen, die weiter zu den Alkoxysilan-Polymeren umgesetzt werden können.

In einer Ausführungsform des erfindungsgemässen Verfahrens weist das Polymer-Rückgrat der Formel (I) genau zwei Amino, Mercapto- oder Hydroxylgruppen auf. Solche Präpolymere führen zu Alkoxysilan-Polymeren mit einem niedrigen Vernetzungsgrad, die besonders bevorzugt für Anwendungen, welche eine hohe Elastizität und einen tiefen Modul, wie beispielsweise elastische Dichtmassen verwendet werden.

In einer anderen Ausführungsform des erfindungsgemässen Verfahrens weist das Polymer-Rückgrat der Formel (I) mehr als zwei Amino,- Mercapto- oder Hydroxylgruppen auf. Solche Präpolymere führen zu Alkoxysilan-Polymeren mit einem hohen Vernetzungsgrad, die besonders bevorzugt für Anwendungen, welche einen hohen Modul, eine hohe Zugfestigkeit oder eine hohe Härte, wie beispielsweise Klebstoffe oder Beschichtungen verwendet werden.

Beispielsweise kann in der Seitenkette der Monomereinheit des Polymer-Rückgrats eine Amino-, Mercapto- oder Hydroxylgruppe enthalten sein. In einer Ausführungsform weist im Wesentlichen jede Monomereinheit eine Seitenkette mit einer Amino-, Mercapto- oder Hydroxylgruppe auf, die mit einem Chlorameisensäureester der Formel (IIa) reagieren kann.

Vorzugsweise ist das Polymer-Rückgrat A ausgewählt aus der Gruppe bestehend aus Polyethern, Polyalkohole, Polyolefinen, Polyestern, Polycarbonaten, Polyacrylaten, Polysulfiden, Polysiloxanen, Polyamine, Polyamide, Polyacetalen und Copolymeren davon. Am meisten bevorzugt ist Polypropylenglycol, und Polyester wie Poly(3-methyl-1,5-pentandiol adipate).

Vorzugsweise ist das Präpolymer der Formel (III), das mit dem erfindungsgemässen Verfahren hergestellt werden kann, ausgewählt aus der Gruppe bestehend aus:

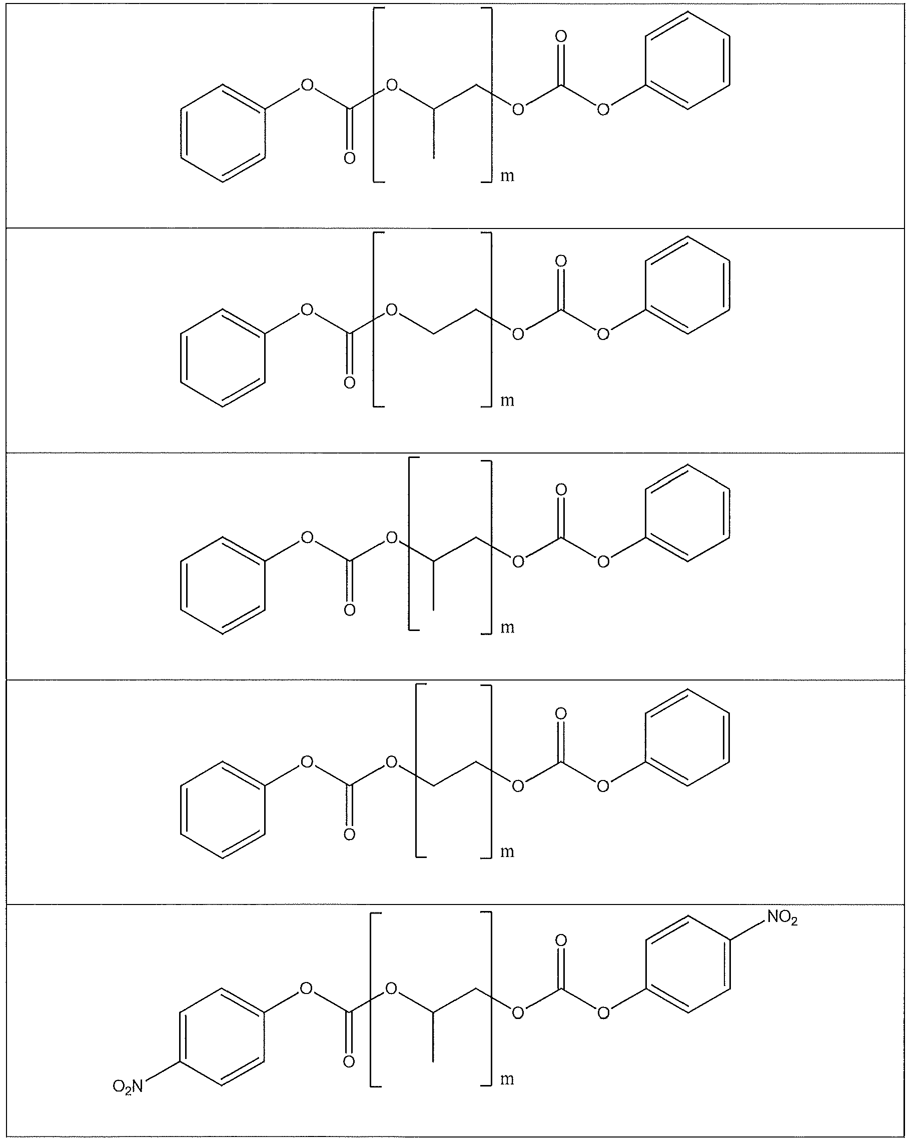

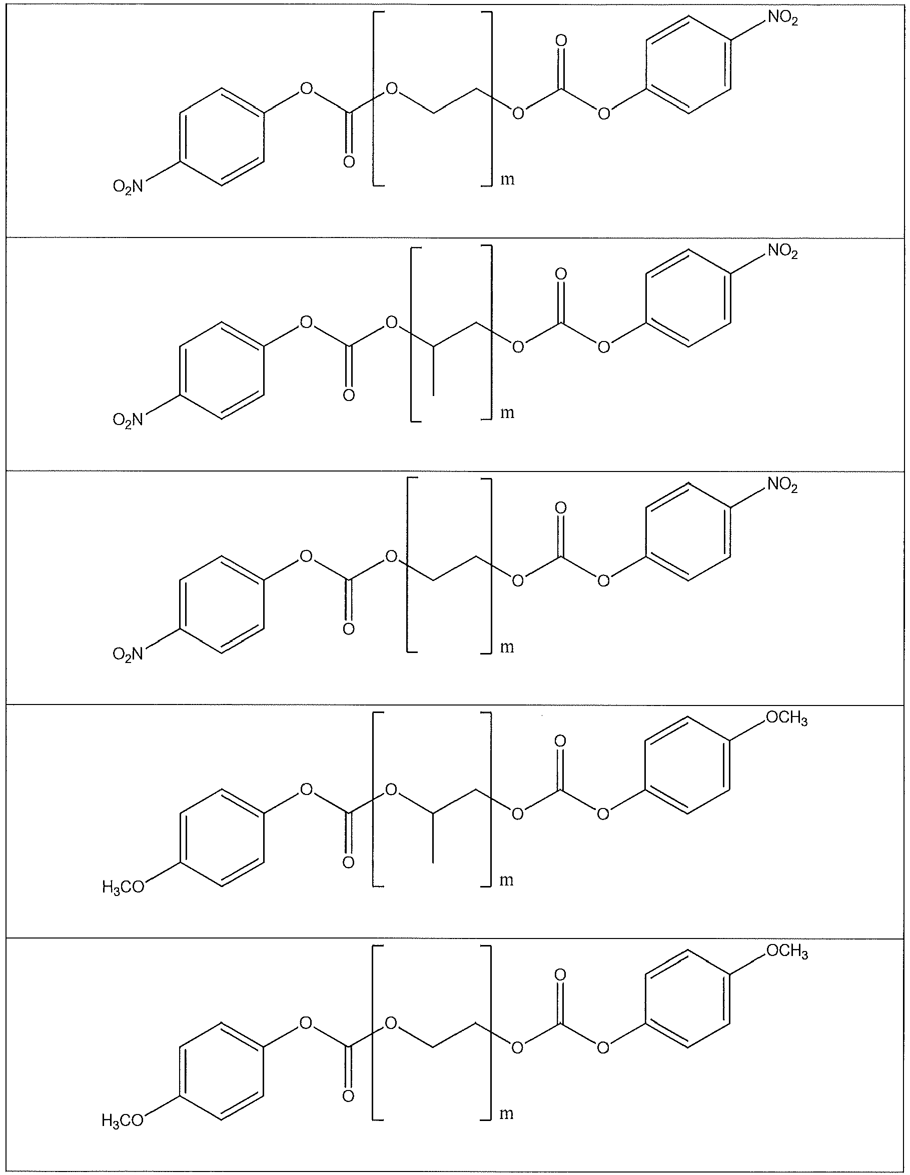

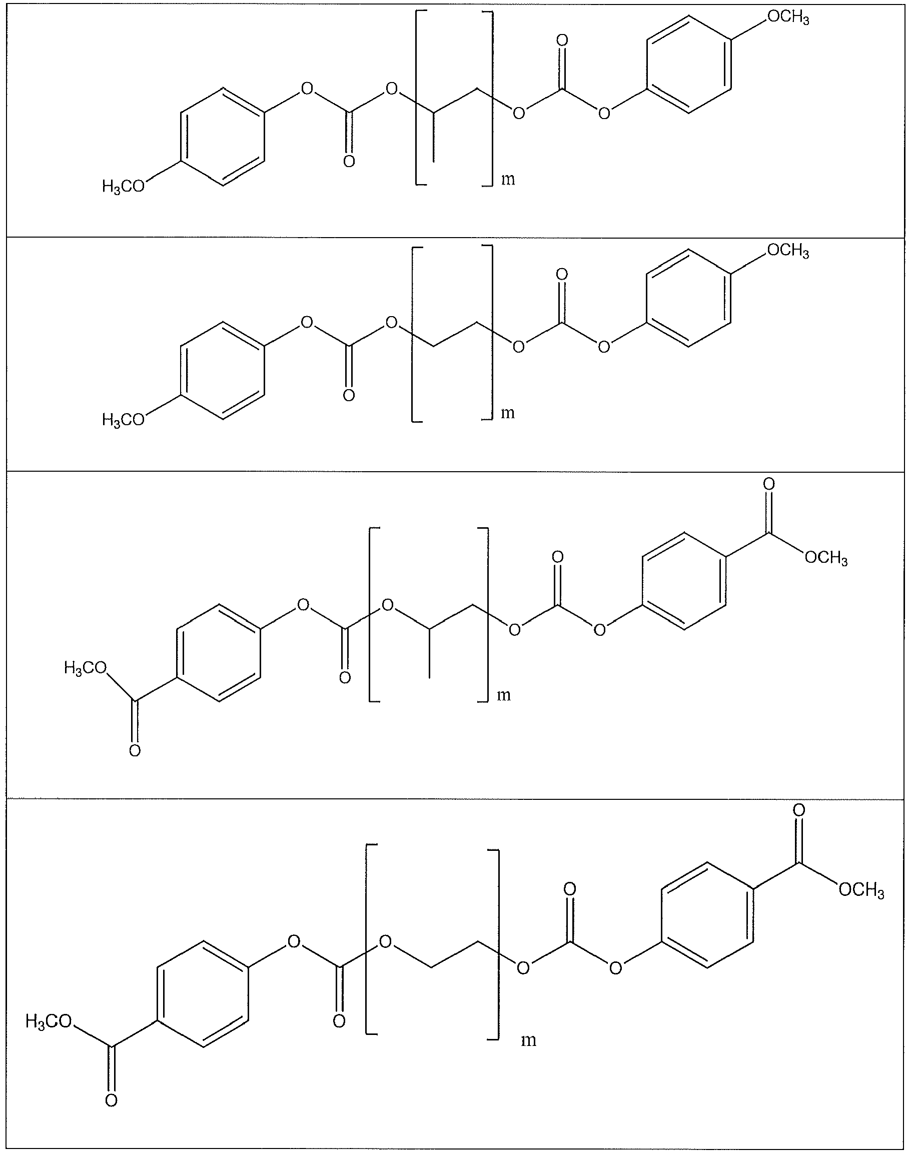

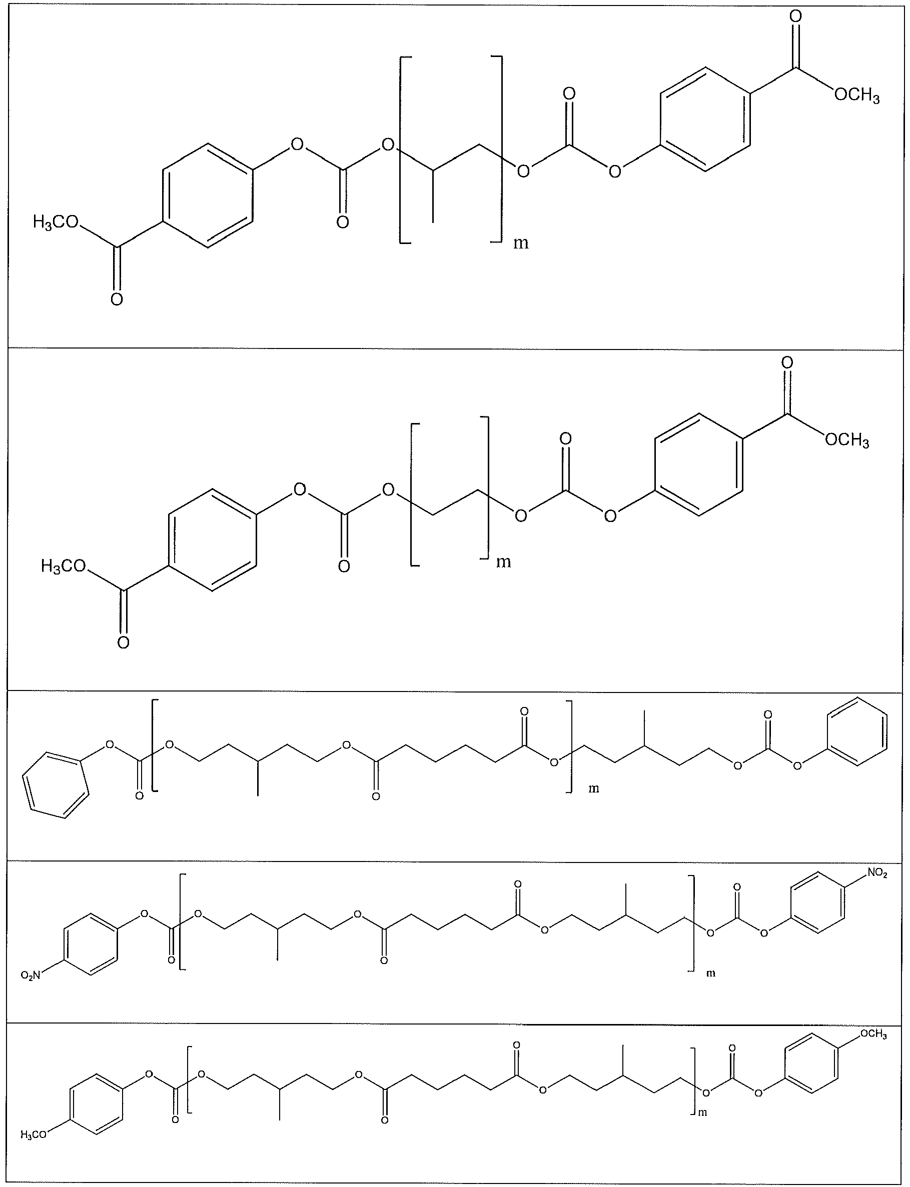

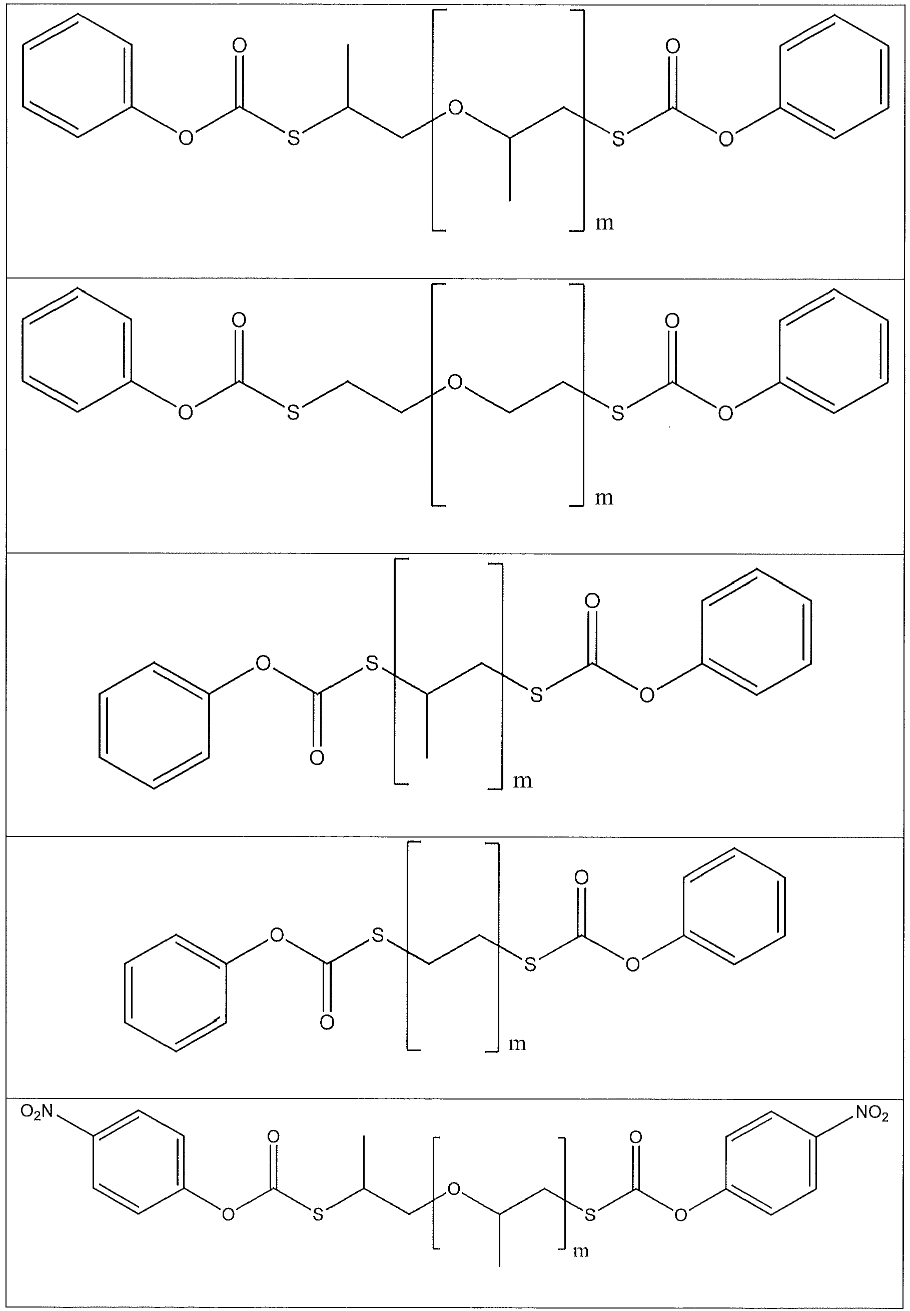

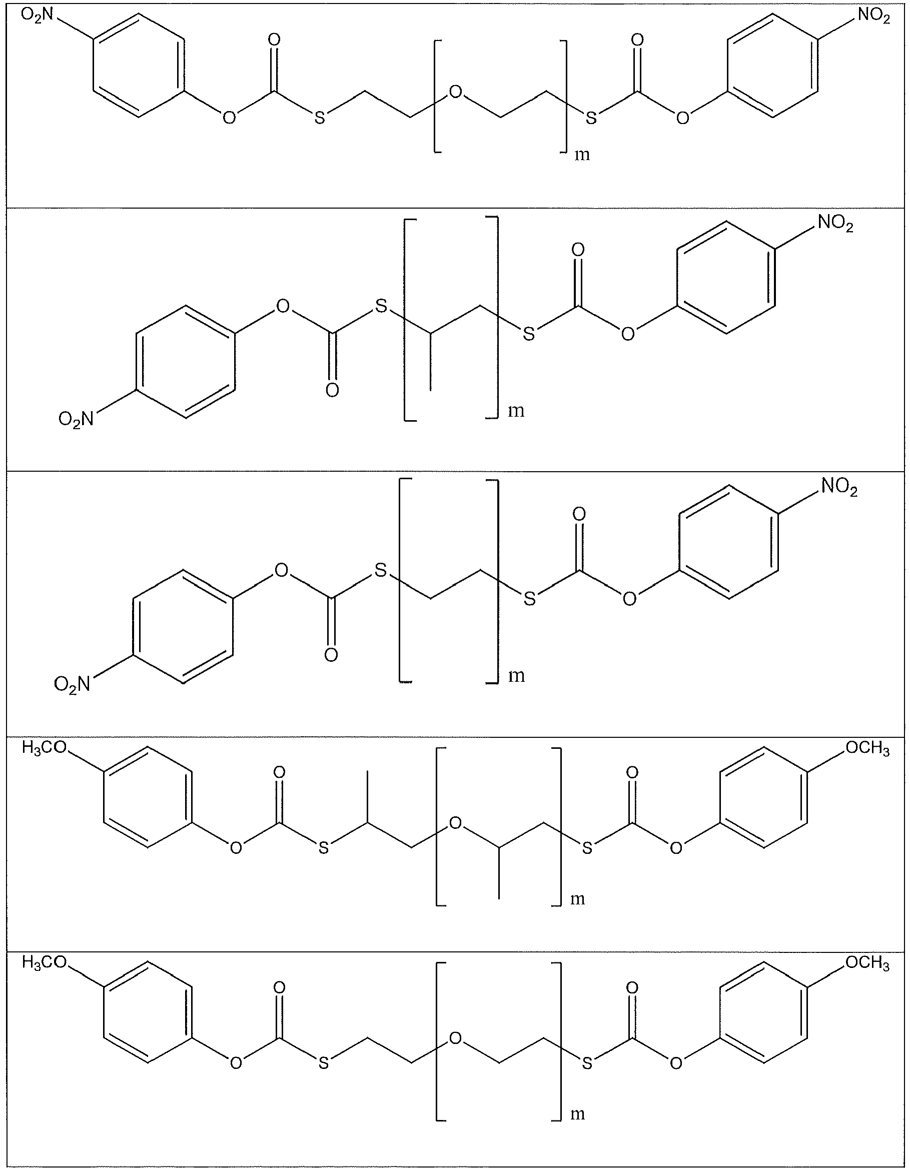

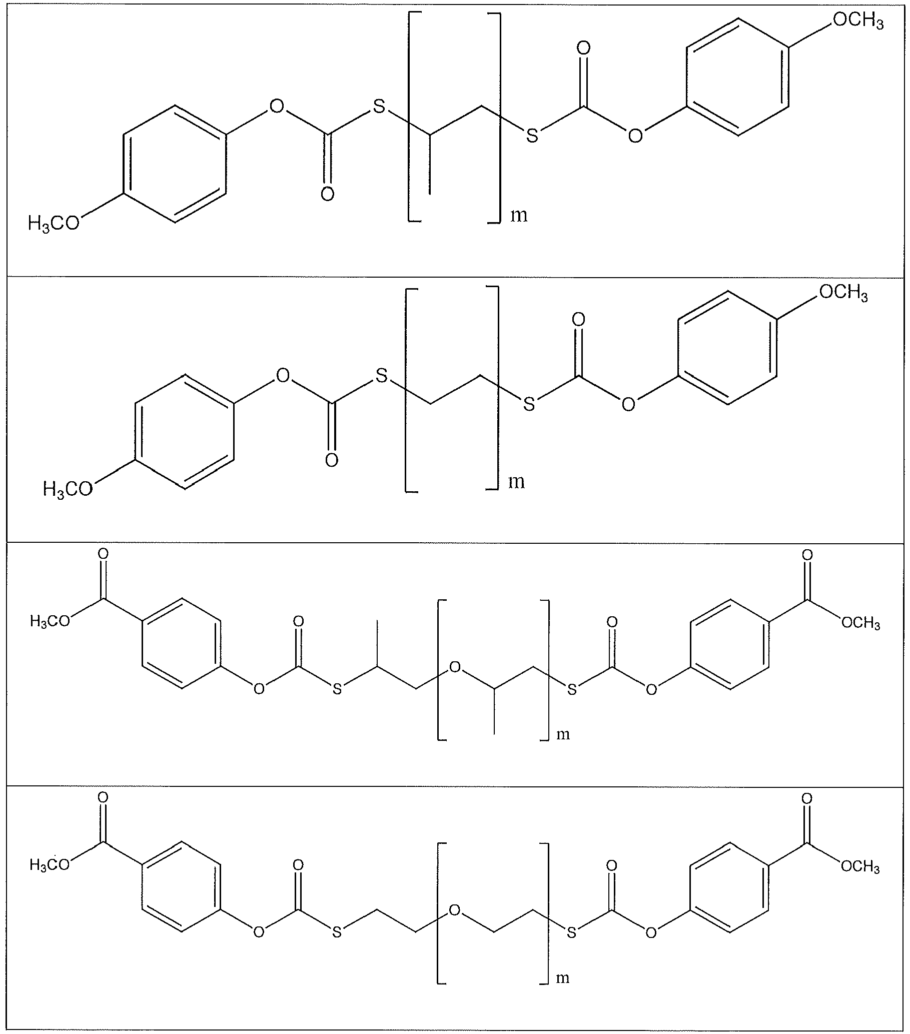

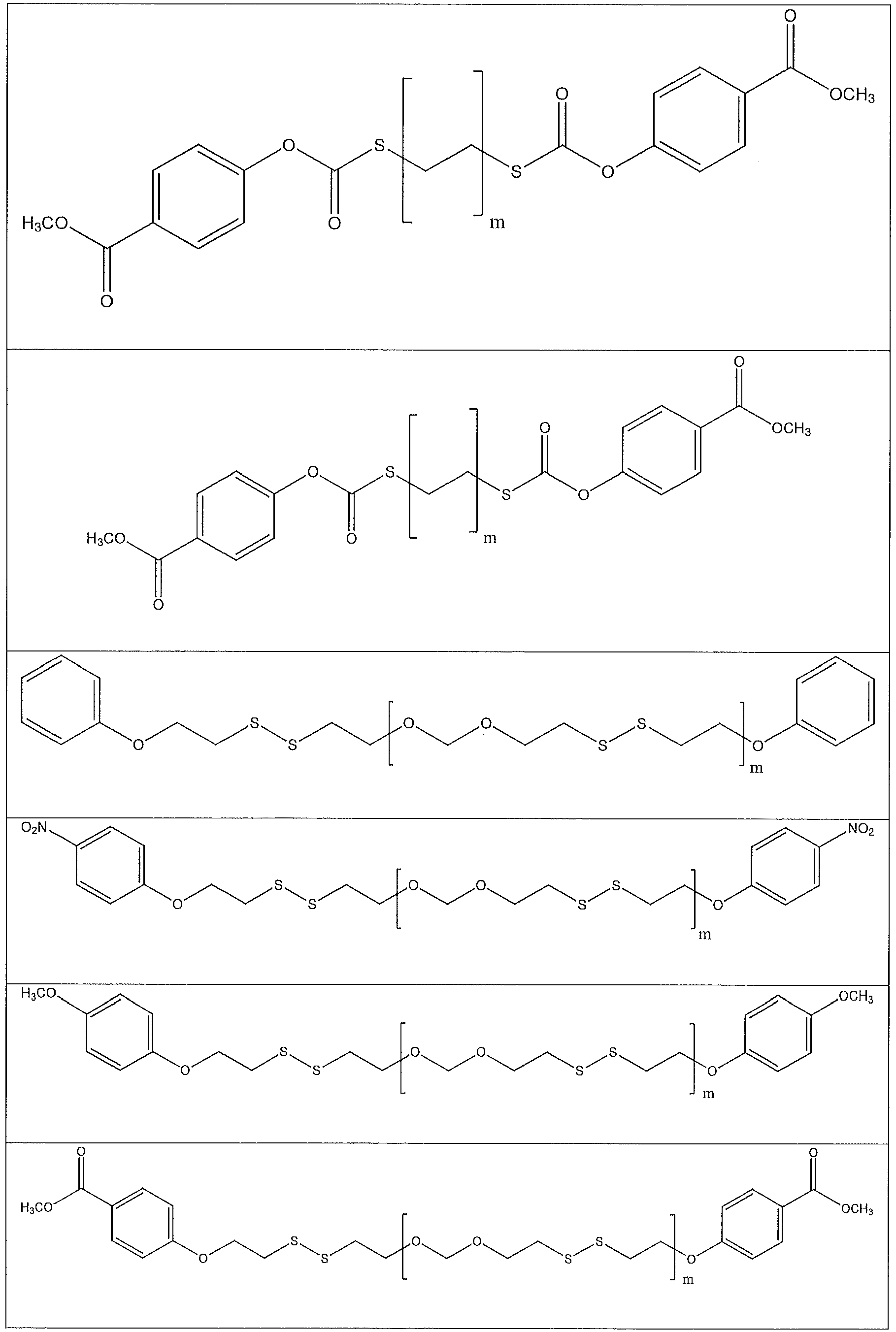

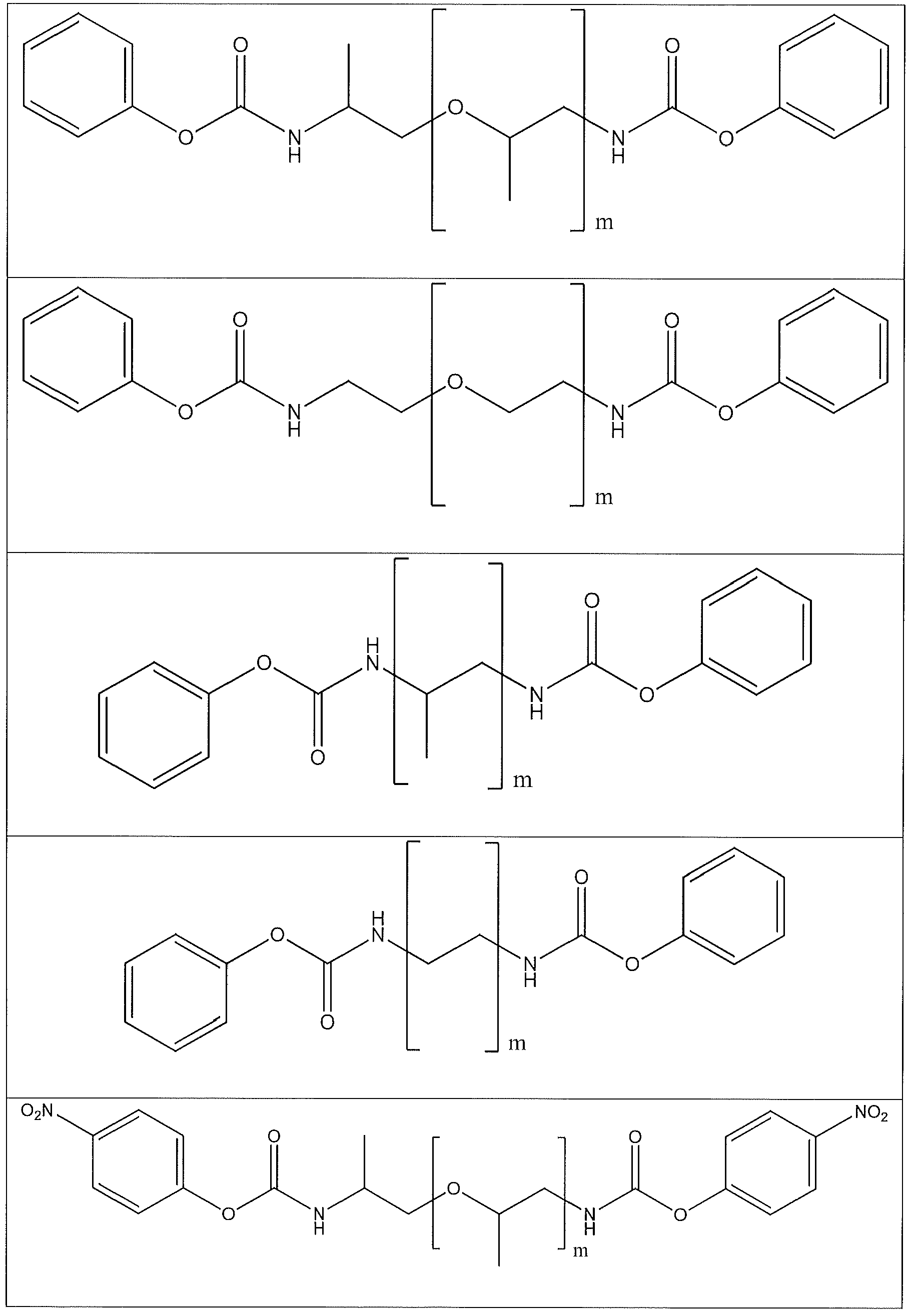

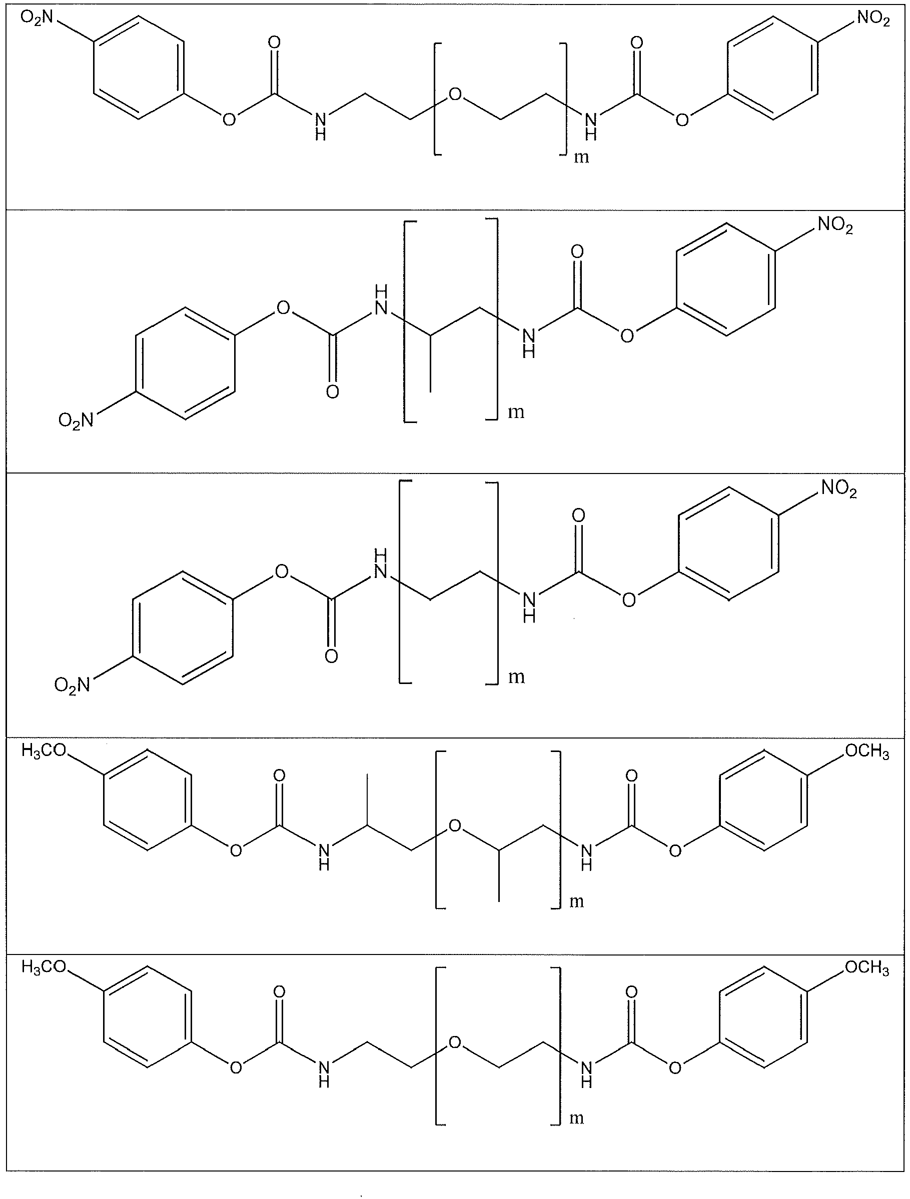

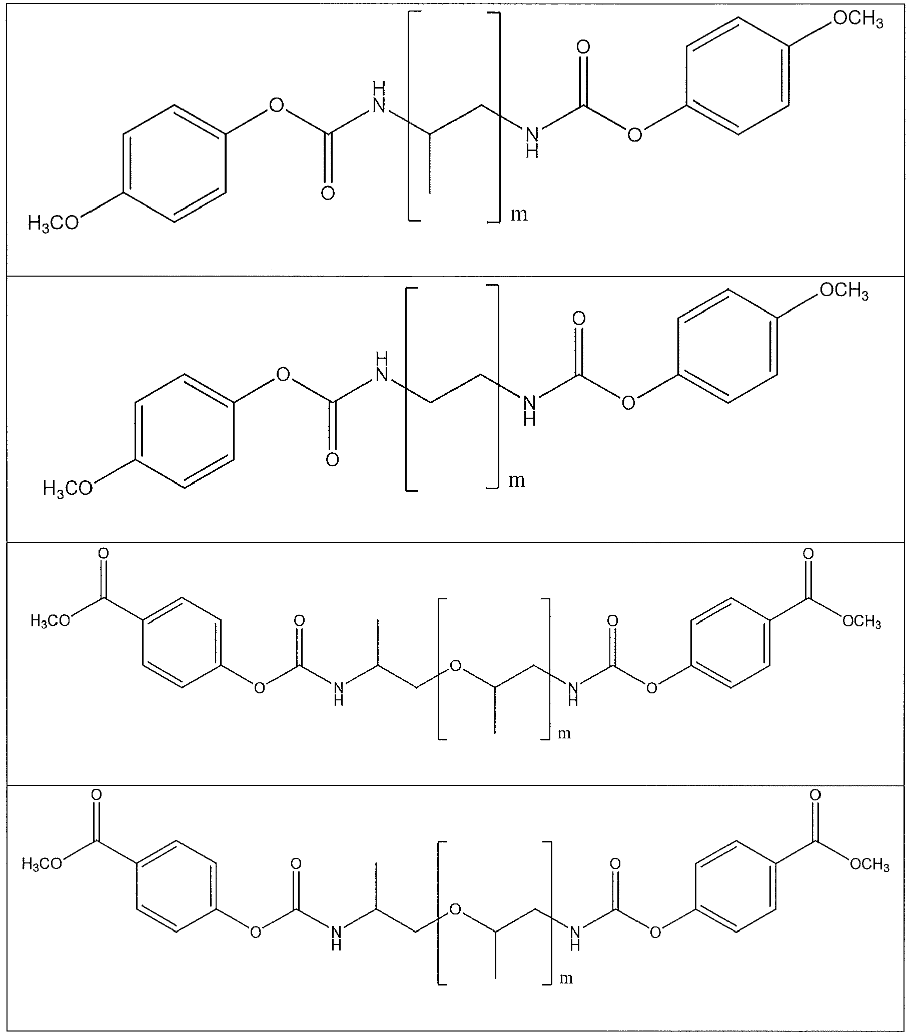

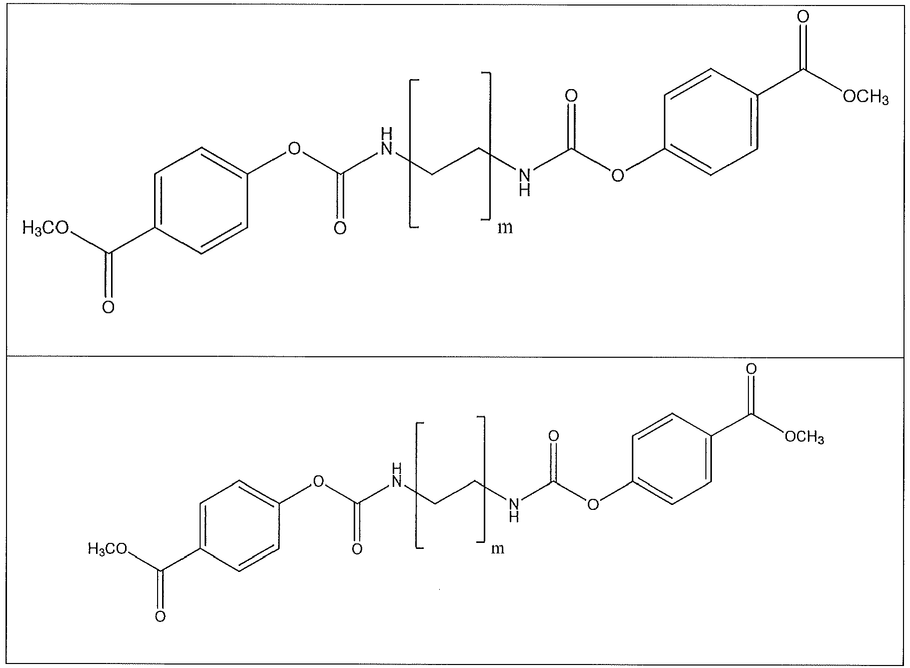

wobei m die Anzahl der Monomereinheiten darstellt und das Molekulargewicht zwischen 1`000 und 100`000 g/mol, vorzugsweise zwischen 2`000 und 50`000 g/mol ist und damit die Anzahl m der Monomereinheiten definiert.

In einer weiteren Ausführungsform können die Chlorformiate der Formel (IIa) zuerst in ein Pyrocarbonat der Formel (IIb) umgesetzt werden und anschliessend diese weiter mit dem Amino-, Mercapto, oder Hydroxygruppen tragenden Polymer umgesetzt werden. Ein solches Verfahren empfiehlt sich insbesondere bei den Alkylchlorformiaten, die sehr empfindlich sind.

Um das silanmodifizierte Polymer zu erhalten, wird in einem weiteren Schritt das mit dem erfindungsgemässen Verfahren hergestellte Präpolymer entweder mit
(A) einem Aminoalkoxysilan oder einem Mercaptoalkoxysilan gegebenenfalls in Anwesenheit eines Katalysators (II) für den zweiten Reaktionsschritt umgesetzt oder
(B) einem Diamin, einem Triamin, einem Dithiol oder einem Trithiol zu einem modifizierten Präpolymer reagiert und anschliessend mit einer eine Epoxidgruppe aufweisenden Alkoxysilanverbindung umgesetzt, wobei ein Alkoxysilan-Polymer ausgebildet wird.

Beim Reaktionsschritt der Variante (A) wird demnach das mit dem erfindungsgemässen Verfahren erhaltene Präpolymer in einer Ausführungsform mit einem Aminoalkoxysilan zu einem Carbamat (Urethan) weiterreagiert. Die Reaktion findet vorzugsweise bei bei -20 bis 150°C statt, besonders bevorzugt bei 20 bis 100°C und ganz besonders bevorzugt bei 20 bis 60°C.

Beim Aminoalkoxysilan handelt es sich bevorzugt um eine Verbindung ausgewählt aus der Gruppe von 3-Aminopropyltrimethoxysilan, 3-Aminopropyltriethoxysilan, N- (n-Butyl) -3-aminopropyltrimethoxysilan, N- (n-Butyl) - 3- aminopropylmethyldimethoxysilan, N- (n-Butyl) -3-aminopropyltriethoxysilan, N-ethyl-aminoisobutyltrimethoxysilan, N-ethyl-aminoisobutylmethyldimethoxysilan, 3-piperazinopropyltrimethoxysilan, 3-piperazinopropylmethyldimethoxysilan, 3-piperazinopropyltriethoxysilan, N- (2-aminoethyl) -3-aminopropyltrimethoxysilan, N-(2-aminoethyl) -3-aminopropyltriethoxysilan, N- (2-aminoethyl) -3-aminopropylmethyldimethoxysilan, N-Cyclohexyl-3- aminopropyltriethoxysilan und N-Cyclohexyl-3-amino- propyltrimethoxysilan . Ausserdem sind alpha-Silane wie beispielsweise N-Cyclohexylaminomethyltrietoxysilan und N- (6-Aminohexyl) aminomethoxyltriethoxysilane oder Ureidosilane wie beispielsweise 3-Ureidopropyl- trimethoxysilan geeignet. Ebenso ist ein äquimolares Reaktionsprodukt eines Diamins mit einem Epoxysilan wie beispielsweise dem äquimolaren Reaktionsprodukt aus Piperazin und 3-Glycidoxypropyltrimethoxysilan ein geeignetes Alkoxysilan. Besonders bevorzugt sind Alkoxysilane mit einer primären Aminogruppe oder einer cyclischen Aminogruppe, da diese besonders reaktiv sind.

Für diese Reaktion kann ein Katalysator verwendet werden. Beim Katalysator kann es sich um heterogene oder homogene Katalysatoren handeln, wie beispielsweise MCM-41 (Mobil Composition of Matter No. 41; ein mesoporöses Material mit hierarchischer Porenstruktur aus einer Familie von silikatischen und alumosilikatischen Feststoffen) , organisch modifizierter MCM-41, Mg/La Metalloxide, nanokristallines MgO, LiOH, Li₂C0₃, K₂C0₃, Cs₂C0₃, Mg₅(OH)₂ (CO₃)₄, Zirconium ( IV) butoxid, Zirkonium (IV) propoxid, Zirkonium ( IV) tert-butoxid, Zirconium (IV) isopropoxid, Titantetraalkoholat, Dibutylzinndilaurat, Dibutylzinnoxid, Bistributylzinnoxid, Yttrium (III) acetylacetonat, Zircon (III) acetylacetonat, Ytterbium (III) acetylacetonat, 1, 8-Diazabicyclo [5.4.0] undec-7-en (DBU) , 1,5-Diazobicyclo [4.3.0] ηoη-5-en (DBN) , Triflate wie beispielsweise Bismuth (III) triflat, Lanthanum (III) triflat, Ytterbium(III) triflat, Yttrium (III) triflat, Zirconyl triflat 1, 5, 7-triazabicyclo [4.4.0] dec-5-en-(TBD) , Pyridin, 4- (Dimethylamino) -pyridin, 1, 4-Diazabicyclo [2.2.2] octan, ein Trimethylsilylamide wie beispielsweise Lithium- bis (trimethylsilyl) amid, ZrCl2, SnCl₂ oder N- Heterocyclische Carbene wie beispielsweise 1 , 3-Bis (2, 4,6-trimethylphenyl) imidazol-2-yliden. Weitere mögliche Katalysatoren für die Umesterung sind in der europäischen Patentanmeldung EP 2 308 914, insbesondere in den Absätzen 40 bis 42 beschrieben.

Es ist aber auch möglich den Katalysator wegzulassen.

Das so erhaltene Alkoxysilan-Polymer kann demnach mit hoher Ausbeute erhalten werden.

Beim Reaktionsschritt der Variante (A) wird in einer anderen Ausführungsform das erfindungsgemässe Präpolymer mit einem Mercaptoalkoxysilan zu einem Thiocarbonat weiterreagiert. Die Reaktion findet vorzugsweise bei -20 bis 150°C statt, besonders bevorzugt bei 20 bis 100°C und ganz besonders bevorzugt bei 20 bis 60°C.

Beim Thiol handelt es sich bevorzugt um ein Mercaptoalkoxysilan ausgewählt aus der Gruppe von 3-Mercaptopropyltrimethoxysilan, 3-Mercaptopropyltriethoxysilan, 3-Mercaptopropylmethyldimethoxysilane und 3-Mercaptopropyltrimethoxysilan.

Beim Reaktionsschritt der Variante (B) wird das erfindungsgemässe Präpolymer mit einem geeigneten Diamin, Triamin, Dithiol oder Trithiol gegebenenfalls in Anwesenheit eines Katalysators (II) umgesetzt. Mögliche Diamine sind dabei beispielsweise Hexamethyldiamin, Octamethylendiamin, Methylpentandiamin, Metaxylylendiamin, Trimethylenhexamethylendiamin, Piperazin, Aminoethylpiperazin oder Isophorondiamin.

Mögliche Triamine sind beispielsweise Pentan-1,2,5-triamin, 1,2,3-Propantriamin, Phenyl-1,2,4-triamin, Phenyl-1,3,5-triamin, Pyrimidin-2,4,6-triamin.

Mögliche Mercaptoverbindungen für diese Umsetzung sind im Detail in EP 1 944 329, insbesondere in den Absätzen 68 bis 71 beschrieben.

Beispiele sind Dithiothreitol, 1 , 2-Ethanedithiol, 1,2-Propanedithiol, 1, 3-Propanedithiol, 1, 4-Butanedithiol, 1, 5-Pentanedithiol, 1, 6-Hexanedithiol, 1, 7-Heptanedithiol, 1, 8-Octanedithiol , 1, 9-Nonanedithiol, 1, 10-Decanedithiol, 1, 12-Dodecanedithiol, 2 , 2-Dimethyl-1, 3-Propandithiol, 3- Methyl-1, 5-Pentandithiol, 2-Methyl-l, 8-Octandithiol, 1, 1, 1-tris (Mercaptomethyl) ethan, 2-Ethyl-2-Mercaptomethyl- 1, 3-propandithiol, tetrakis (Mercaptomethyl) methan, 1,4- cyclohexanedithiol, 1,4-bis(Mercaptomethyl) cyclohexan, bis (2-Mercaptoethyl) ether, bis (2-Mercaptoethyl) sulfide, bis (2-Mercaptoethyl) disulfid, 2, 5-bis (Mercaptomethyl) -1, 4-dioxan, 2, 5-bis (Mercaptomethyl) -1, -dithian, 3,3'-thiobis (Propan-1, 2-dithiol) , 2,2' -thiobis (Propane-1, 3- dithiol) ; und aromatische Mercaptogruppen-enthaltende substituierte oder unsubstituierte Verbindungen wie Thiophenol, 1, 2-Benzoldithiol, 1, 3-Benzoldithiol, 1,4-Benzoldithiol, 1,3,5-Benzoltrithiol, Toluol-3,4-dithiol, Mercaptomethylbenzol, 1 , 2-bis (Mercaptomethyl ) benzol, 1,3-bis(Mercaptomethyl)benzol, 1,4-bisMercaptomethyl) benzol und 1,3, 5-tris (Mercaptomethyl) benzol.

Das so entstandene modifizierte Präpolymer wird anschliessend in einem zweiten Schritt mit einer eine Epoxidgruppe aufweisenden Alkoxysilanverbindung zu dem Alkoxysilan-Polymer umgesetzt. Diese Reaktion zwischen einem endständigen Amin eines Polymers und einer eine Epoxidgruppe aufweisenden Alkoxysilanverbindung ist in der europäischen Patentanmeldung EP 2 341 116, insbesondere in den Absätzen [0024] bis [0042] beschrieben.

Wird das Alkoxysilan-Polymer durch Umsetzung eines modifiziertes Präpolymer mit mindestens einer eine Epoxidgruppe aufweisenden Alkoxysilanverbindung erhalten, so liegt die bevorzugte Anzahl an Silylgruppen pro Polymer bei primären Aminogruppen im Allgemeinen zwischen 1 und der doppelten Anzahl an Aminogruppen und bei sekundären Aminogruppen zwischen 1 und der einfachen Anzahl an Aminogruppen. Gleiches gilt für Präpolymere, die mit Dithiolen modifiziert wurden. Die Reaktivität zwischen des die wenigstens zwei Amino- oder Mercaptogruppen aufweisenden Präpolymers und der die Epoxidgruppe aufweisenden Verbindung ist relativ hoch. Die Reaktion kann optional durch Anwesenheit eines Katalysators (II) noch beschleunigt werden. Mögliche Katalysatoren sind Triflate wie beispielsweise Bismuth (III) triflat, Lanthanum (III) triflat, Ytterbium (III) triflat, Yttrium (III) triflat, Zirconyl triflat, tertiäre Amine wie beispielsweise triethylamine, Benzyldimethylamine, Triethanolamine, Phenolderivate wie Tris-(dimethylaminomethyl) phenol.

Weitere eine Epoxidgruppe aufweisende Alkoxysilanverbindungen, die für die Zwecke der vorliegenden Erfindung denkbar sind, werden in WO 2008/031895 (Seite 7, Nr. 41 bis 47) aufgeführt. Weiter sei diesbezüglich [2- (3, 4- Epoxycyclohexyl) ethyl] trimethoxysilan erwähnt.

Alternativ ist es auch möglich, dass das durch das erfindungsgemässe Verfahren erhaltene Präpolymer vor den Reaktionsschritten gemäss Variante (A) oder Variante (B) mit einem Alkohol oder einem aktivierten Alkohol umzuestern (Variante (C)). Vorzugsweise handelt es sich bei dem aktivierten Alkohol um Glycerincarbonat. Die Reaktion führt zu einem modifizierten Präpolymer, an dessen linearen Carbonatgruppen zusätzlich cyclische Carbonatgruppen gebunden sind. Die cyclischen Carbonatgruppen weisen eine deutlich höhere Reaktivität auf. Anschliessend kann ein Aminoalkoxysilan oder ein Mercaptoalkoxysilan über eine Hydroxyurethan- oder eine Hydroxythiourethanbindung an das modifizierte Präpolymer gebunden werden.

Vorzugsweise liegt die gemittelte Anzahl Silylgruppen pro Alkoxysilan-Polymer in einem Bereich von 1 bis 10 und hängt von der Anzahl der Carbonatgruppen im Präpolymer ab. Bei einem linearen Polymer-Rückgrat liegt die Anzahl in der Regel bei ca. 2, bei einem verzweigten Polymer-Rückgrat in der Regel höher.

Die gemäss den oben beschriebenen Reaktionsverfahren (Variante (A) , Variante (B) oder Variante (C)) erhaltenen Alkoxysilan-Polymere sind vorzugsweise in einer Zusammensetzung enthalten, die als feuchtigkeitshärtenden Dicht- oder Klebstoff verwendet wird. Eine solche Zusammensetzung ist im Wesentlichen wasserfrei. Ein feuchtigkeitshärtender Dicht- oder Klebstoff härtet nach Kontakt mit Luftfeuchtigkeit zu einem Dichtungsmittel oder Klebstoff aus. Die erfindungsgemäss erhältlichen Alkoxysilan-Polymere sind unter Ausschluss von Luftfeuchtigkeit lagerstabil.

Im Besonderen können bei Verwendung der Verbindung in einer Dicht- oder Klebstoffzusammensetzung durch die Wahl des Polymer-Rückgrats einerseits die Eigenschaften der pastösen Zusammensetzung, wie z.B. das toxische Profil, die Viskosität, Rheologie, Verarbeitbarkeit, Standfestigkeit usw., beeinflusst werden. Andererseits können durch die Wahl des Polymer-Rückgrats die Eigenschaften der ausgehärteten Masse beeinflusst werden. So können insbesondere hinsichtlich der Beständigkeit, also z.B. der Hitzebeständigkeit, der Brandbeständigkeit, der Tieftemperaturflexibilität, der Tieftemperaturverarbeitbarkeit, der UV-Stabilität, der Wetterstabilität, der Chemikalienbeständigkeit, der Fäkalienbeständigkeit, der Öl- und Kraftstoffbeständigkeit, der Wasserbeständigkeit und der Abriebfestigkeit, aber auch hinsichtlich der mechanischen Eigenschaften, also z.B. der Zugfestigkeit, der Härte, der Elastizität und der Klebrigkeit, die gewünschten Eigenschaften eingestellt werden. Ähnliches gilt hinsichtlich der Durchlässigkeit, d.h. der Wasser-, Dampf- und Gasdurchlässigkeit, und hinsichtlich des toxischen Profils, also z.B. der Lebensmittelverträglichkeit, der Trinkwasser-Verträglichkeit und der biologischen Abbaubarkeit, der ausgehärteten Dicht- oder Klebstoffzusammensetzung, die nach Bedarf eingestellt werden können.

Insbesondere bei der Verwendung der erfindungsgemässen Verbindung in einer Klebestoffzusammensetzung können die Haftungseigenschaften, also z.B. die Kunststoffhaftung, die Nasshaftung, die Haftung auf porösen und alkalischen oder sauren Oberflächen und die Haftung auf nassen Untergründen, durch entsprechende Wahl des Polymer-Rückgrats in geeigneter Weise auf den jeweiligen Anwendungszweck hin, eingestellt werden. Zudem bestimmt das Polymer-Rückgrat massgeblich die physikalischen Eigenschaften der ausgehärteten Masse, wie z.B. den Brechungsindex und die elektrische, thermische und akustische Leitfähigkeit bzw. Isolation. Weiter sind Verbindungen bevorzugt, in denen das Polymer-Rückgrat wenigstens teilweise oder vollständig Polysulfid ist, das vorzugsweise terminal mit Hydroxygruppen funktionalisiert ist. Solche finalen Polymere führen zu Dicht- und Klebstoffen mit einer guten Nasshaftung, die zudem eine hohe chemische, thermische und photolytische Stabilität aufweisen. Aufgrund der Variabilität der möglichen einzustellenden Eigenschaften eignen sich die Alkoxysilan-Polymere der vorliegenden Erfindung insbesondere zum Einsatz in Anwendungsgebieten, in denen eine solche "Massschneiderung" von Eigenschaften erwünscht ist. Bevorzugt ist beispielsweise ein Einsatz in der Bau-, Maschinen-, Elektro-, Fahrzeug- oder Luftfahrtindustrie, in der etwa die Wasserbeständigkeit und die Gasdurchlässigkeit für Flächenabdichtungen, die mechanischen Eigenschaften und Hafteigenschaften struktureller Verklebungen sowie etwa die Brandschutzeigenschaften der entsprechenden Zusammensetzung usw. eingestellt werden können.

Die dank der Struktur des Präpolymers erhältliche chemische Beständigkeit, insbesondere die Öl- und Kraftstoffbeständigkeit der Alkoxysilan-Polymere, ermöglicht auch den Einsatz in der Automobilindustrie.

Denkbar ist im Übrigen auch etwa die Verwendung im Schiffsbau aufgrund der erhältlichen Wetterbeständigkeit, oder in elektronischen Anwendungen, aufgrund der erhältlichen Isolationseigenschaften. Für letztgenannte Anwendungen ist es erfindungsgemäss zudem möglich, ein silikonfreies System zu wählen, womit die bei konventionellen Silikonmassen beobachteten Nachteile hinsichtlich des Ausschwitzens umgangen werden können. Das Alkoxysilan-Polymer kann des Weiteren in Beschichtungen wie beispielsweise Antikratzbeschichtungen, Haft- oder Antihaftbeschichtungen, Antigraffitibeschichtungen, als Bauabdichtungen für horizontale oder vertikale Flächen, welche auch verträglich mit Kupfer oder Bitumen sein können oder Beschichtungen für Textilien verwendet werden. Das Alkoxysilan-Polymer kann generell in 1-Komponenten oder 2-Komponentensystemen eingesetzt werden. Denkbar ist des Weiteren auch der Einsatz als Formgedächtnispolymere ("shape-memory polymer"), welche beispielsweise in der Medizinaltechnik, Robotik oder Automobilindustrie eingesetzt werden können.

### Beispiele

Die Erfindung wird an den nachfolgenden Beispielen weiter erläutert.

### Beispiel 1: Carbonat-terminierter Polyether mit Aminosilan

95.7g (0.024mol) Polyether-diol (Desmophen 4028BD der Firma Covestro) werden in 100mL Toluol bei Raumtemperatur (25°C) gelöst. Anschliessend werden 6.1g (0.06mol) Triethylamin zugegeben. Die nach kurzer Zeit homogene Lösung ist farblos und klar. Während 45 - 75 Minuten werden der Reaktionslösung 7.74g (0.049mol) Phenylchlorformiat vorgelöst in 12mL Toluol gleichmässig zu getropft. Die Reaktionsmischung wird für mindestens 8 Stunden weitergerührt. Anschliessend wird das Reaktionsgemisch auf ca. 8°C heruntergekühlt. Der entstandene Niederschlag von Triethylaminhydrochlorid wird abfiltriert und mit wenig Toluol abgewaschen. Das Lösungsmittel wird anschliessend im Vakuum abgezogen. Als Produkt wird ein Carbonat-terminierter Polyether in hoher Ausbeute erhalten.

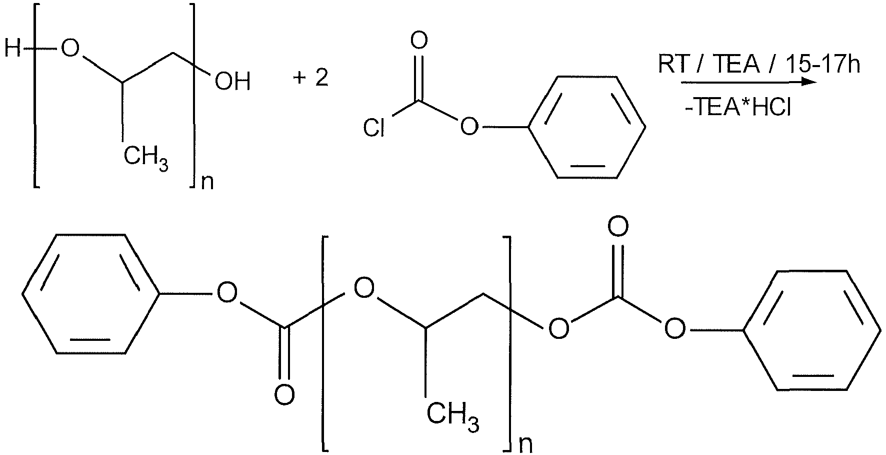

50g (0.012mol) des Phenylcarbonat-terminierten Polymers werden mit 4.30g (0.024mol) 3-Aminopropyltrimethoxysilan (Evonik) während mindestens 12h bei 25°C reagieren gelassen. Das entstandene Phenol bleibt in gelöster Form in der farblosen bis leicht gelblichen, klaren Reaktionsmischung zurück. Als Produkt wird Trimethoxysilan-terminierter Polyether erhalten. Die Trimethoxysilangruppen sind über eine Urethanbindung mit dem Polyether verbunden.

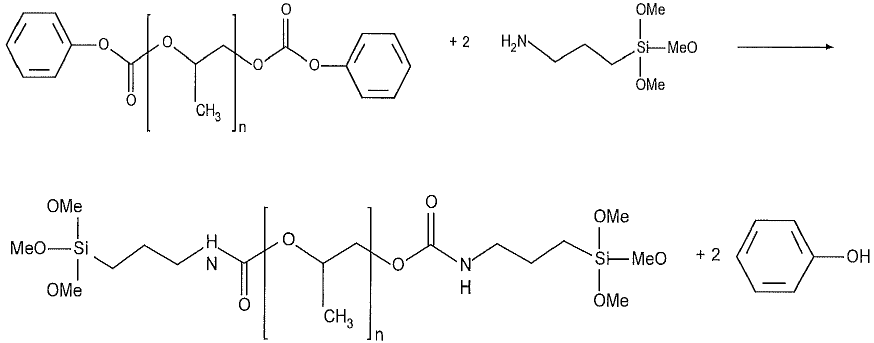

Das Polymer kann zur Herstellung von feuchtigkeitshärtenden Kleb- Dicht- und Beschichtungsstoffen auf Basis silan-terminierter Polymere verwendet werden.

### Beispiel 2: Carbonat-terminierter Polyether mit Aminosilan

50g (0.012mol) des Phenylcarbonat-terminierten Polymers, hergestellt analog dem Beispiel 1, werden mit 6.26g(0.024mol) Piperazinylmethylmethyldiethoxysilane (SiSiB ^{®} SILANES) während mindestens 12h bei 25°C reagieren gelassen. Das entstandene Phenol bleibt in gelöster Form in der farblosen bis leichtgelblichen, klaren Reaktionsmischung zurück. Als Produkt wird Diethoxysilan-terminierter Polyether erhalten. Die Diethoxysilangruppen sind über eine Urethanbindung mit dem Polyether verbunden.

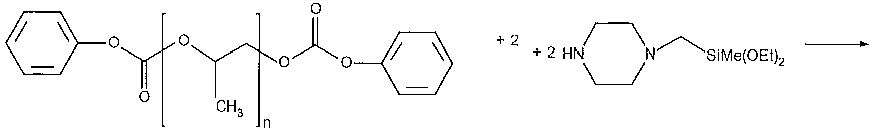

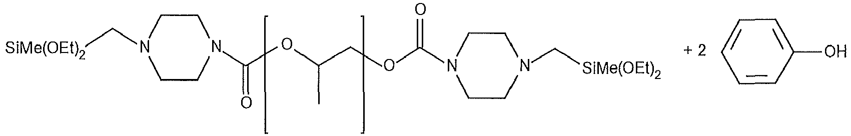

Das Polymer kann zur Herstellung von feuchtigkeitshärtenden Kleb- Dicht- und Beschichtungsstoffen auf Basis silan-terminierter Polymere verwendet werden.

### Beispiel 3: Carbonat-terminierter Polyether mit Aminosilan

50g (0.012mol) des Phenylcarbonat-terminierten Polymers, hergestellt analog dem Beispiel 1, werden mit 6.26g (0.024mol) [3-(1-Piperazinyl)propyl]trimethoxysilan während mindestens 12h bei 25°C reagieren gelassen. Das entstandene Phenol bleibt in gelöster Form in der farblosen bis leicht gelblichen, klaren Reaktionsmischung zurück. Als Produkt wird Trimethoxysilan-terminierter Polyether erhalten. Die Trimethoxysilangruppen sind über eine Urethanbindung mit dem Polyether verbunden.

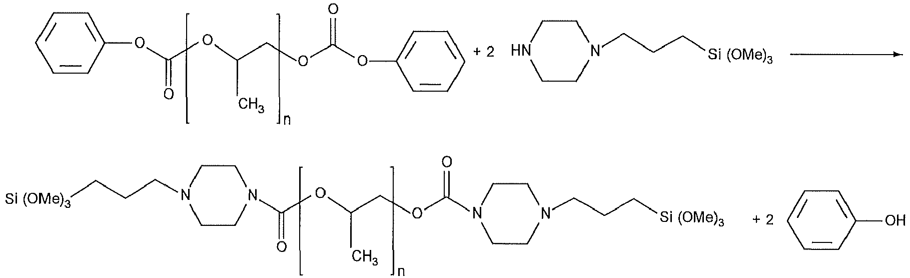

Das Polymer kann zur Herstellung von feuchtigkeitshärtenden Kleb- Dicht- und Beschichtungsstoffen auf Basis silan-terminierter Polymere verwendet werden.

### Beispiel 4: Methylcarbonat-terminierter Polyether mit Aminosilan

95.7g (0.024mol) Polyether-diol (Desmophen 4028BD der Firma Covestro) werden bei 80°C mit Vakuum für eine Stunde vorgetrocknet. Anschliessend wird auf Raumtemperatur abgekühlt. Bei Raumtemperatur werden 7.2g (0.054mol) Dimethyldicarbonat (Merck) zugegeben. Als Katalysator werden der Reaktionsmischung 0.1g Lanthanum triflate zugegeben. Die Reaktionsmischung wird über Nacht bei Vakuum reagieren gelassen um das entstehende Methanol sowie Kohlendioxid aus der Reaktionsmischung zu entfernen. Als Produkt wird Methylcarbonat-terminierter Polyether in hoher Ausbeute erhalten.

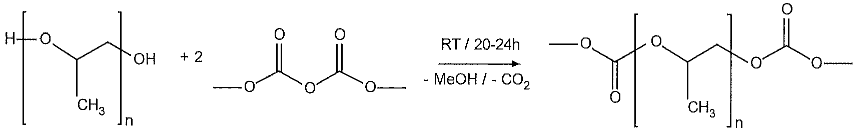

50g (0.012mol) des Carbonat-terminierten Polymers werden mit 4.30g (0.024mol) 3-Aminopropyltrimethoxysilan (Evonik) und 0.1g 1,5,7-Triazabicyclo[4.4.0]dec-5-en (Sigma-Aldrich) während 24h bei 60°C reagiert. Das entstandene Methanol wird abdestilliert. Als Produkt wird Trimethoxysilan-terminierter Polyether erhalten. Die Trimethoxysilangruppen sind über eine Urethanbindung mit dem Polyether verbunden.

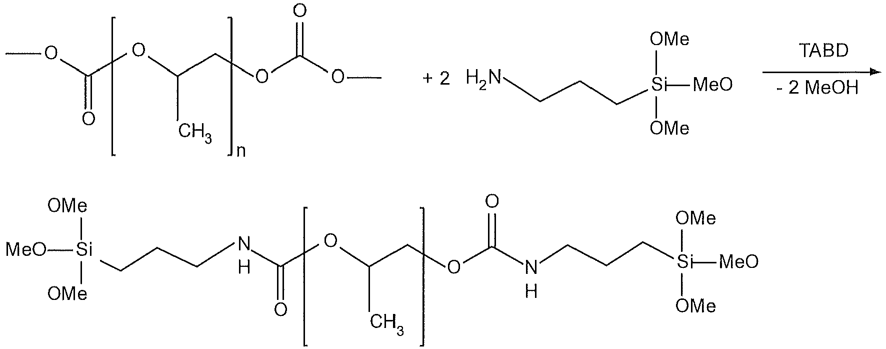

Das Polymer kann zur Herstellung von feuchtigkeitshärtenden Kleb- Dicht- und Beschichtungsstoffen auf Basis silan-terminierter Polymere verwendet werden.

### Beispiel 6: Carbonat-terminierter Polyester mit Aminosilan

100g (0.016mol) Polyester-diol (Polyol P-6010 der Firma Kuraray mit einer Viskosität von 105Pas) werden in 100mL Toluol bei Raumtemperatur (25°C) gelöst. Anschliessend werden 4.2g (0.04mol) Triethylamin zugegeben. Die nach kurzer Zeit homogene Lösung ist farblos und klar. Während 45 - 75 Minuten werden der Reaktionslösung 5.3g (0.034mol) Phenylchlorformiat vorgelöst in 8mL Toluol gleichmässig zu getropft. Die Reaktionsmischung wird für mindestens 8 Stunden weitergerührt. Anschliessend wird das Reaktionsgemisch auf ca. 8°C heruntergekühlt. Der entstandene Niederschlag von Triethylaminhydrochlorid wird abfiltriert und mit wenig Toluol abgewaschen. Das Lösungsmittel wird anschliessend im Vakuum abgezogen. Als Produkt wird Phenylcarbonat-terminierter Polyester in hoher Ausbeute mit einer Viskosität von 101Pas erhalten.

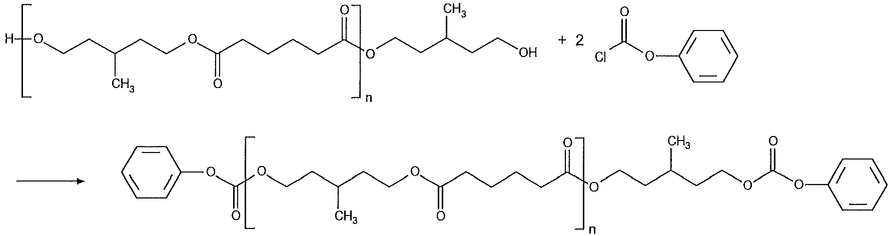

50g (0.008mol) des Phenylcarbonat-terminierten Polymers werden mit 3.0g(0.016mol) 3-Aminopropyltrimethoxysilan (Evonik) während mindestens 12h bei 25°C reagieren gelassen. Das entstandene Phenol bleibt in gelöster Form in der farblosen bis leicht gelblichen, klaren Reaktionsmischung zurück. Als Produkt wird Trimethoxysilan-terminierter Polyester mit einer Viskosität von 107Pas erhalten. Die Trimethoxysilangruppen sind über eine Urethanbindung mit dem Polyester verbunden.

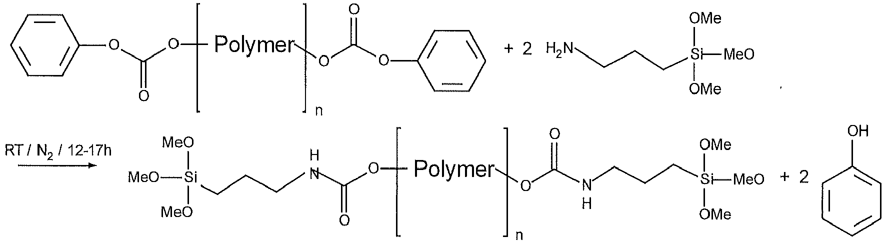

Das Polymer kann zur Herstellung von feuchtigkeitshärtenden Kleb- Dicht- und Beschichtungsstoffen auf Basis silan-terminierter Polymere verwendet werden.

### Vergleichsbeispiel

100g (0.016mol) Polyester-diol (Polyol P-6010 der Firma Kuraray mit einer Viskosität von 105Pas) werden mit 5.35g (0.033mol) Carbonyldiimidazol (CDI) während 12h bei 60°C unter Stickstoff gerührt. Als Produkt wird Imidazolcarbamat-terminierter Polyether mit einer Viskosität von 124Pas erhalten.

50g (0.008mol) des Imidazolcarbamat-terminierten Polymers werden mit 3.0g(0.016mol) 3-Aminopropyltrimethoxysilan (Evonik) während 24h bei 60°C reagiert. Als Produkt wird Trimethoxysilan-terminierter Polyether mit einer Viskosität von 190Pas erhalten. Die Trimethoxysilangruppen sind über eine Urethanbindung mit dem Polyether verbunden.

### Formulierungsbeispiele 7-8

Die folgenden Formulierungen (Angaben in Gewichtsprozent) wurden in einem Speedmixer (DAC 1100 FVZ, Hauschild) gemischt und in 310ml PE-Kartuschen (Ritter) abgefüllt. Die fertigen Formulierungen wurden im Normalklima gelagert (23°C/50% r.f.), und die Viskosität nach Lagerung mit einem Rheometer (RS6000, Haake) gemessen. Während Formulierungsbeispiel 7 die für silanterminierte Polymere typische Erhöhung der Viskosität mit der Lagerung aufweist, sinkt beim Formulierungsbeispiel 8 die Viskosität mit der Lagerung. Dies deutet auf einen Abbau der Polymerketten hin.

| | **Formulierungsbeispiel 7** | **Formulierungsbeispiel 8** |
|---|---|---|
| Trimethoxysilan-terminierter Polyester aus Bsp 6 | 34.9% | |
| Trimethoxysilan-terminierter Polyester aus Vergleichsbeispiel | | 34.9% |
| Vinyltrimethoxysilan | 1% | 1% |
| Omyalite 95T | 50% | 50% |
| Titandioxid | 2% | 2% |
| Thixatrol MAX | 2% | 2% |
| Diisononylphthalsäureester | 9% | 9% |
| 3-Aminopropyltrimethoxysilan | 1% | 1% |
| 1,8-Diazabicyclo[5.4.0]undec-7-en | 0.1% | 0.1% |
| Viskosität bei 10 s⁻¹ [Pas] nach 1d Lagerung der Kartusche im Normalklima | 331 | 303 |
| Viskosität bei 10 s⁻¹ [Pas] nach 7d Lagerung der Kartusche im Normalklima | 399 | 224 |

### Beispiel 9 Carbamat-terminierter Polyether mit Aminosilan

80g (0.02mol) Polyether-diamin mit einer mittleren molaren Masse von 4000g/mol (erhältlich bei der Firma Sigma-Aldrich) werden in 100mL Toluol bei Raumtemperatur (25°C) gelöst. Anschliessend werden 5.1g (0.05mol) Triethylamin zugegeben. Die nach kurzer Zeit homogene Lösung ist gelb und klar. Während 45 - 75 Minuten werden der Reaktionslösung 2.5g (0.016mol) Phenylchlorformiat vorgelöst in 8mL Toluol gleichmässig zu getropft. Die Reaktionsmischung wird für mindestens 8 Stunden weitergerührt. Anschliessend wird das Reaktionsgemisch auf ca. 8°C heruntergekühlt. Der entstandene Niederschlag von Triethylaminhydrochlorid wird abfiltriert und mit wenig Toluol abgewaschen. Das Lösungsmittel wird anschliessend im Vakuum abgezogen. Als Produkt wird Phenylcarbamatterminierter Polyether in hoher Ausbeute erhalten.

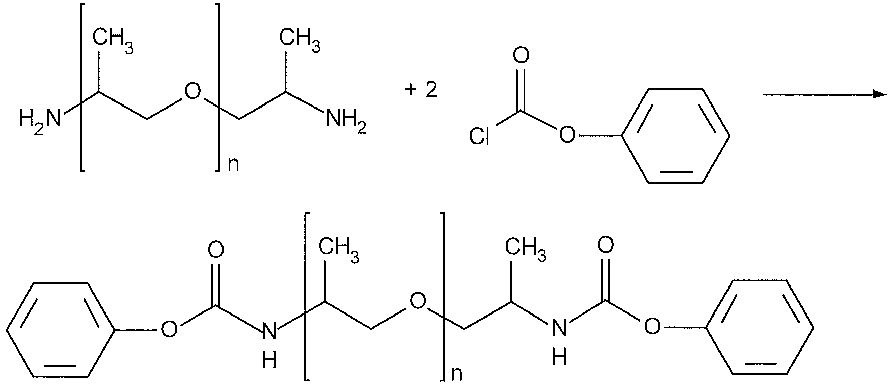

42g (0.01mol) des Phenylcarbonat-terminierten Polymers werden mit 3.6g(0.02mol) 3-Aminopropyltrimethoxysilan (Evonik) bei einer Badtemperatur von 50°C umgesetzt. Als Katalysator werden der Reaktionsmischung 0.03g 1,5,7-Triazabicyclo[4.4.0]dec-5-en (Sigma-Aldrich) dazugegeben.

Die Reaktion ist nach spätestens 17h vollständig. Das entstandene Phenol bleibt in gelöster Form in der gelben, klaren Reaktionsmischung zurück. Als Produkt wird Trimethoxysilan-terminierter Polyether erhalten. Die Trimethoxysilangruppen sind über eine Harnstoffbindung mit dem Polyether verbunden.

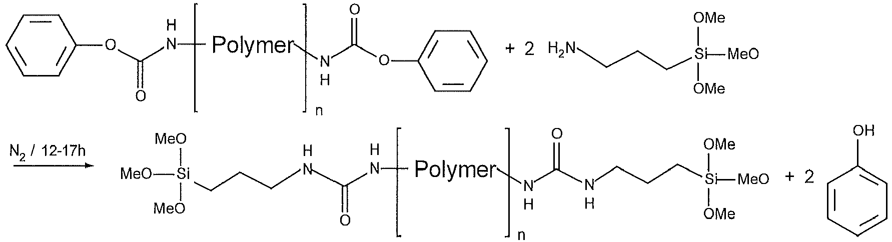

Das Polymer kann zur Herstellung von feuchtigkeitshärtenden Kleb- Dicht- und Beschichtungsstoffen auf Basis silan-terminierter Polymere verwendet werden.

## Patentansprüche

1. Verfahren zur Herstellung eines Alkoxysilan-Polymers über ein Carbamat-, Thiocarbonat- oder Carbonat-terminiertes Präpolymer (IIIa) oder (IIIb), wobei die Herstellung des Carbamat-, Thiocarbonat- oder Carbonat-terminierten Präpolymers eine Umsetzung eines mit wenigstens zwei Amino, Mercapto- oder Hydroxylgruppen terminierten Polymer-Rückgrats der Formel (I) mit einem Chlorameisensäureester der Formel (IIa) oder einem Pyrocarbonat der Formel (IIb) 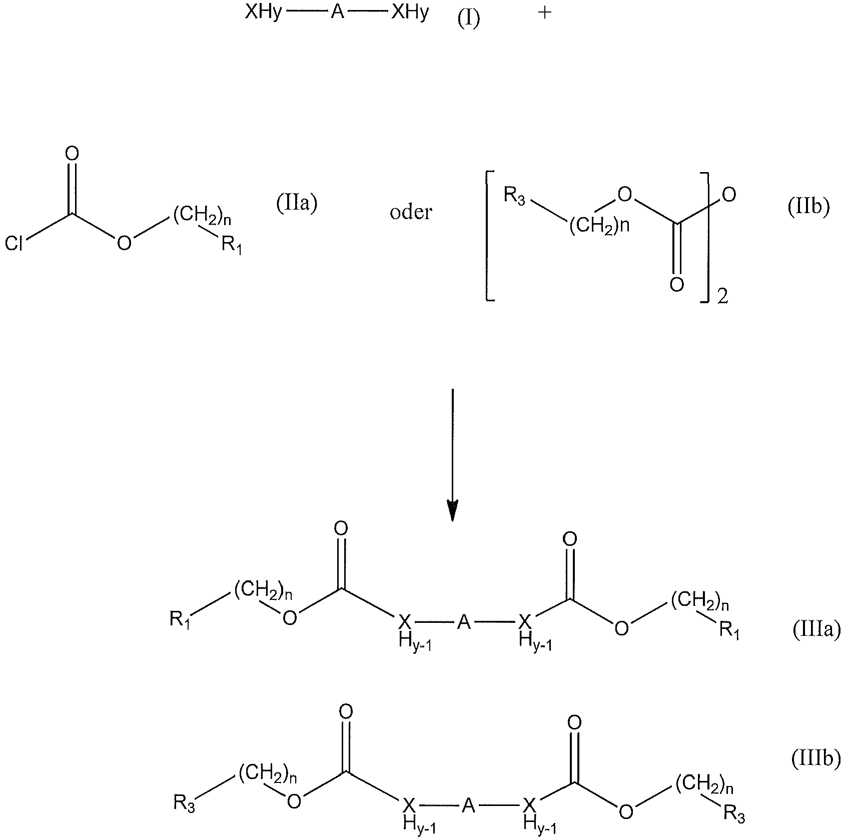 umfasst, wobei
R₁ und R₃ eine lineare oder verzweigte, gesättigte oder ungesättigte Alkyl- oder Alkenylgruppe mit 1 bis 10 Kohlenstoffatomen oder ein mono- oder polycyclisches aliphatisches oder aromatisches Ringsystem mit 5 bis 18 Kohlenstoffatomen im Ringsystem darstellt, das optional durch einen oder mehrere Reste R² substituiert ist, wobei R² ausgewählt ist aus der Gruppe bestehend aus einer linearen oder verzweigten, gesättigten oder ungesättigten Alkyl- oder Alkenylgruppe mit 1 bis 10 Kohlenstoffatomen, einer Nitrogruppe, einer Carbonsäurestergruppe, einer Carbonsäuregruppe, einer Sulfongruppe und einer Halogengruppe
X ist Sauerstoff, Stickstoff oder Schwefel
y ist 1, wenn X Sauerstoff oder Schwefel ist und 1 oder 2, wenn X Stickstoff ist,
n im Falle einer linearen oder verzweigten, gesättigten oder ungesättigten Alkyl- oder Alkenylgruppe 0 und im Falle eines mono- oder polycyclischen aliphatisches oder aromatisches Ringsystems 0, 1 oder 2 ist und
A für ein Polymer-Rückgrat steht.

2. Verfahren nach Anspruch 1, wobei die Umsetzung mit einem Chlorameisensäureester der Formel (IIa) erfolgt.

3. Verfahren nach Anspruch 1, **dadurch gekennzeichnet, dass** die Reaktion in Abwesenheit eines ersten Katalysators (I) durchgeführt wird.

4. Verfahren nach einem der vorangehenden Ansprüchen, **dadurch gekennzeichnet, dass** R¹ ein mono- oder polycyclisches aromatisches Ringsystem mit 6 bis 18 Kohlenstoffatomen im Ringsystem darstellt, das ausgewählt ist aus der Gruppe bestehend aus Phenyl, 1-Naphthyl, 2-Naphthyl, 1-Anthryl, 2-Anthryl, 9-Anthryl, 1-Phenanthryl und 9-Phenanthryl und n 0 oder 1 ist.

5. Verfahren nach einem der Ansprüche 1 bis 4, **dadurch gekennzeichnet, dass** R¹ eine Alkylgruppe ausgewählt aus der Gruppe bestehend aus Methyl, Ethyl, Propyl, iso-Propyl, n-Butyl, iso-Butyl, tert-Butyl, n-Pentyl, iso-Pentyl, n-Hexyl, n-Heptyl, n-Octyl, n-Nonyl und n-Decyl ist.

6. Verfahren nach einem der vorangehenden Ansprüche, **dadurch gekennzeichnet, dass** das Polymer-Rückgrat der Formel (I) genau zwei Amino-, Mercapto- oder Hydroxylgruppen aufweist.

7. Verfahren nach einem der Ansprüche 1 bis 5, **dadurch gekennzeichnet, dass** das Polymer-Rückgrat der Formel (I) mehr als zwei Amino-, Mercapto- oder Hydroxylgruppen aufweist.

8. Verfahren nach Anspruch 7, **dadurch gekennzeichnet, dass** im Wesentlichen jede Monomereinheit des Polymer-Rückgrats eine Seitenkette mit einer Amino-, Mercapto- oder Hydroxylgruppe aufweist.

9. Verfahren nach einem der vorangehenden Ansprüche, **dadurch gekennzeichnet, dass** das Polymer-Rückgrat A ausgewählt ist aus der Gruppe bestehend aus Polyethern, Polyalkohole, Polyolefinen, Polyestern, Polycarbonaten, Polyamine, Polyamide , Polyacrylaten, Polysulfiden, Polysiloxanen, Polyacetalen und Copolymeren davon.

10. Verfahren nach Anspruch 9, **dadurch gekennzeichnet, dass** das Polymer-Rückgrat A Polypropylenglycol oder ein Polyester, vorzugsweise ein Poly(3-methyl-1,5-pentandiol adipate ist.

11. Verfahren nach einem der vorangehenden Ansprüche, **dadurch gekennzeichnet, dass** das Präpolymer (III) in einem weiteren Schritt mit
(A) einem Aminoalkoxysilan oder einem Mercaptoalkoxysilan gegebenenfalls in Anwesenheit eines zweiten Katalysators (II) oder
(B) einem Diamin, einem Triamin, einem Dithiol oder einem Trithiol zu einem modifizierten Präpolymer umgesetzt wird und
anschliessend mit einer eine Epoxidgruppe aufweisenden Alkoxysilanverbindung umgesetzt wird, wobei ein Alkoxysilan-Polymer ausgebildet wird.

12. Verfahren gemäss Anspruch 11, indem das Präpolymer vor den Reaktionsschritten gemäss Variante (A) oder Variante (B) mit einem Alkohol oder einem aktivierten Alkohol umgesetzt wird, wobei der aktivierte Alkohol vorzugsweise Glycerincarbonat ist.

13. Verfahren gemäss einem der Ansprüche 11 oder 12, indem in Variante (A) das Aminoalkoxysilan ausgewählt ist aus der Gruppe von 3-Aminopropyltrimethoxysilan, 3-Aminopropyltriethoxysilan, N- (n-Butyl) -3-aminopropyltrimethoxysilan, N- (n-Butyl) -3-aminopropylmethyldimethoxysilan, N- (n-Butyl) -3-aminopropyltriethoxysilan, N-ethyl-aminoisobutyltrimethoxysilan, N-ethyl-aminoisobutylmethyldimethoxysilan, 3-piperazinopropyltrimethoxysilan, 3-piperazinopropylmethyldimethoxysilan, 3-piperazinopropyltriethoxysilan, N- (2-aminoethyl) -3-aminopropyltrimethoxysilan, N- (2-aminoethyl) -3-aminopropyltriethoxysilan, N- (2-aminoethyl) -3-aminopropylmethyldimethoxysilan und ein äquimolares Reaktionsprodukt aus Piperazin und Glycidoxypropyltrimethoxysilan und das Mercaptoalkoxysilan ausgewählt ist aus der Gruppe von 3-Mercaptopropyltrimethoxysilan, 3-Mercaptopropyltriethoxysilan, 3-Mercaptopropylmethyldimethoxysilane und 3-Mercaptopropyltrimethoxysilan.

## Claims

1. A method for producing an alkoxysilane polymer via a carbamate-, thiocarbonate- or carbonate-terminated prepolymer (IIIa) or (IIIb), wherein the production of the carbamate-, thiocarbonate- or carbonate-terminated prepolymer comprises a reaction of a polymer backbone of formula (I), terminated with at least two amino, mercapto or hydroxyl groups, with a chloroformate of formula (IIa) or a pyrocarbonate of formula (IIb) 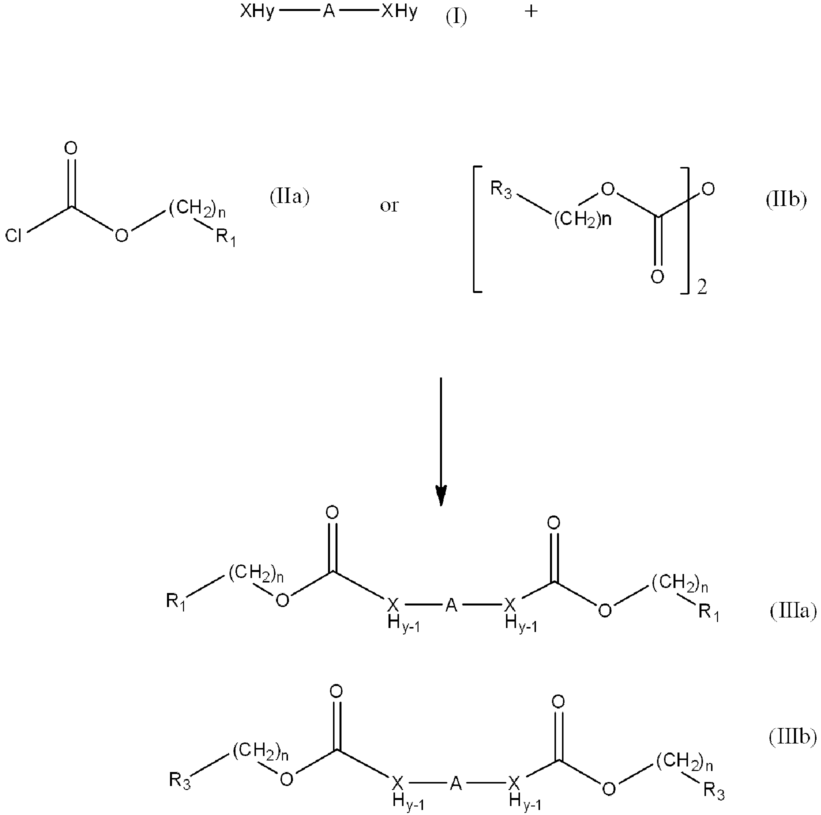 , wherein
R₁ and R₃ are a linear or branched, saturated or unsaturated alkyl or alkenyl group having 1 to 10 carbon atoms or a mono- or polycyclic aliphatic or aromatic ring system having 5 to 18 carbon atoms in the ring system, which is optionally substituted by one or more radicals R², wherein R² is selected from the group consisting of a linear or branched, saturated or unsaturated alkyl or alkenyl group having 1 to 10 carbon atoms, a nitro group, a carboxylic ester group, a carboxylic acid group, a sulfone group and a halogen group
X is oxygen, nitrogen, or sulfur
y is 1 when X is oxygen or sulfur and 1 or 2 when X is nitrogen,
n is 0 in the case of a linear or branched, saturated or unsaturated alkyl or alkenyl group
and
is 0, 1 or 2 in the case of a mono- or polycyclic aliphatic or aromatic ring system and
A is a polymer backbone.

2. The method as claimed in claim 1, wherein the reaction is carried out with a chloroformate of formula (IIa).

3. The method as claimed in claim 1, **characterized in that** the reaction is carried out in the absence of a first catalyst (I).

4. The method as claimed in any of the preceding claims, **characterized in that** R¹ is a mono- or polycyclic aromatic ring system having 6 to 18 carbon atoms in the ring system, selected from the group consisting of phenyl, 1-naphthyl, 2-naphthyl, 1-anthryl, 2-anthryl, 9-anthryl, 1-phenanthryl and 9-phenanthryl and n is 0 or 1.

5. The method as claimed in any of claims 1 to 4, **characterized in that** R¹ is an alkyl group selected from the group consisting of methyl, ethyl, propyl, isopropyl, n-butyl, isobutyl, tert-butyl, n-pentyl, isopentyl, n-hexyl, n-heptyl, n-octyl, n-nonyl and n-decyl.

6. The method as claimed in any of the preceding claims, **characterized in that** the polymer backbone of formula (I) has exactly two amino, mercapto or hydroxyl groups.

7. The method as claimed in any of claims 1 to 5, **characterized in that** the polymer backbone of formula (I) has more than two amino, mercapto or hydroxyl groups.

8. The method as claimed in claim 7, **characterized in that** essentially each monomer unit of the polymer backbone has a side chain with an amino, mercapto or hydroxyl group.

9. The method as claimed in any of the preceding claims, **characterized in that** the polymer backbone A is selected from the group consisting of polyethers, polyalcohols, polyolefins, polyesters, polycarbonates, polyamines, polyamides, polyacrylates, polysulfides, polysiloxanes, polyacetals and copolymers thereof.

10. The method as claimed in claim 9, **characterized in that** the polymer backbone A is polypropylene glycol or a polyester, preferably a poly (3-methyl-1,5-pentanediol adipate).

11. The method as claimed in any of the preceding claims, **characterized in that** the prepolymer (III) is reacted in a further step with
(A) an aminoalkoxysilane or a mercaptoalkoxysilane, optionally in the presence of a second catalyst (II) or
(B) a diamine, a triamine, a dithiol or a trithiol to give a modified prepolymer and
is then reacted with an alkoxysilane compound having an epoxy group, wherein an alkoxysilane polymer is formed.

12. The method as claimed in claim 11, in which the prepolymer is reacted with an alcohol or an activated alcohol prior to the reaction steps according to variant (A) or variant (B), wherein the activated alcohol is preferably glycerol carbonate.

13. The method as claimed in either of claims 11 and 12, in which in variant (A) the aminoalkoxysilane is selected from the group comprising 3-aminopropyltrimethoxysilane, 3-aminopropyltriethoxysilane, N- (n-butyl)-3-aminopropyltrimethoxysilane, N-(n-butyl)-3-aminopropylmethyldimethoxysilane, N-(n-butyl)-3-aminopropyltriethoxysilane, N-ethylaminoisobutyltrimethoxysilane, N-ethylaminoisobutylmethyldimethoxysilane, 3-piperazinopropyltrimethoxysilane, 3-piperazinopropylmethyldimethoxysilane, 3-piperazinopropyltriethoxysilane, N-(2-aminoethyl)-3-aminopropyltrimethoxysilane, N- (2-aminoethyl)-3-aminopropyltriethoxysilane, N- (2-aminoethyl) -3-aminopropylmethyldimethoxysilane and an equimolar reaction product of piperazine and glycidoxypropyltrimethoxysilane and the mercaptoalkoxysilane is selected from the group comprising 3-mercaptopropyltrimethoxysilane, 3-mercaptopropyltriethoxysilane, 3-mercaptopropylmethyldimethoxysilane and 3-mercaptopropyltrimethoxysilane.

## Revendications

1. Procédé de production d'un polymère alcoxysilane par l'intermédiaire d'un prépolymère à terminaison carbamate, thiocarbonate ou carbonate (IIIa) ou (IIIb), dans lequel la production du prépolymère à terminaison carbamate, thiocarbonate ou carbonate comprend une réaction d'un squelette de polymère de formule (I), terminé par au moins deux groupes amino, mercapto ou hydroxyle, avec un chloroformate de formule (IIa) ou un pyrocarbonate de formule (IIb) 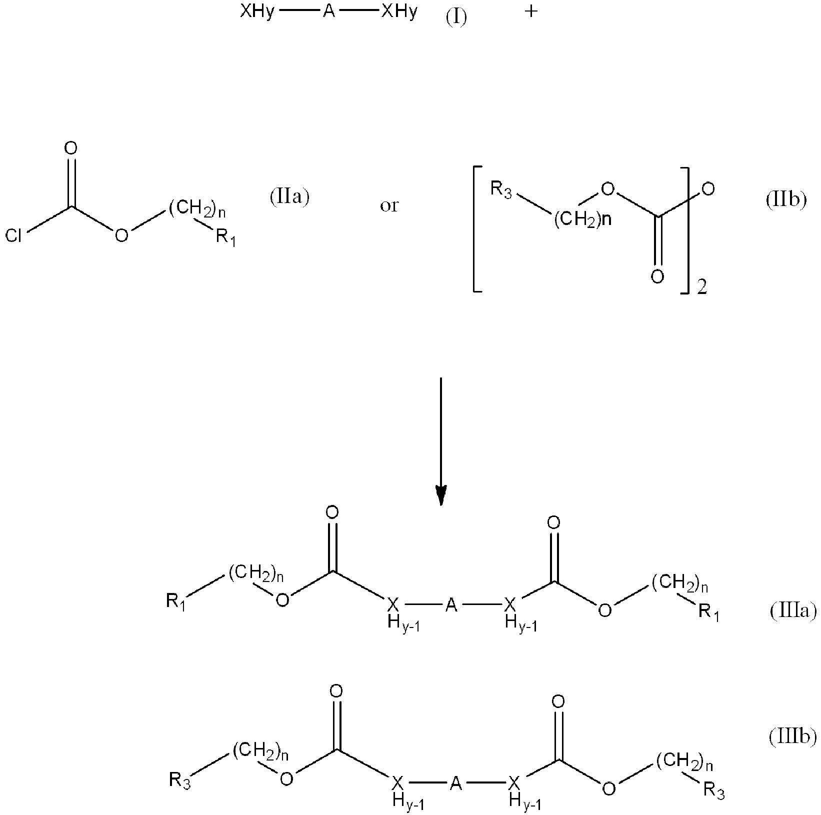 , dans lequel
R₁ et R₃ sont un groupe alkyle ou alcényle linéaire ou ramifié, saturé ou insaturé, ayant de 1 à 10 atomes de carbone ou un système de cycle aliphatique ou aromatique mono- ou polycyclique ayant de 5 à 18 atomes de carbone dans le système de cycle, qui est éventuellement substitué par un ou plusieurs radicaux R², dans lequel R² est choisi dans le groupe constitué d'un groupe alkyle ou alcényle linéaire ou ramifié, saturé ou insaturé, ayant de 1 à 10 atomes de carbone, un groupe nitro, un groupe ester carboxylique, un groupe acide carboxylique, un groupe sulfone et un groupe halogène
X est l'oxygène, l'azote ou le soufre
y est égal à 1 lorsque X est l'oxygène ou le soufre et à 1 ou 2 lorsque X est l'azote,
n est 0 dans le cas d'un groupe alkyle ou alcényle linéaire ou ramifié, saturé ou insaturé
et est 0, 1 ou 2 dans le cas d'un système cyclique aliphatique ou aromatique mono- ou polycyclique et
A est un squelette de polymère.

2. Procédé selon la revendication 1, dans lequel la réaction est effectuée avec un chloroformate de formule (IIa) .

3. Procédé selon la revendication 1, **caractérisé par le fait que** la réaction est effectuée en l'absence d'un premier catalyseur (I).

4. Procédé selon l'une quelconque des revendications précédentes, **caractérisé par le fait que** R¹ est un système de cycle aromatique mono- ou polycyclique ayant de 6 à 18 atomes de carbone dans le système de cycle, choisi dans le groupe constitué par le phényle, le 1-naphtyle, le 2-naphtyle, le 1-anthryle, le 2-anthryle, le 9-anthryle, le 1-phénanthryle et le 9-phénanthryle, et que n est 0 ou 1.

5. Procédé selon l'une des revendications 1 à 4, **caractérisé par le fait que** R¹ est un groupe alkyle choisi dans le groupe constitué par le méthyle, l'éthyle, le propyle, l'isopropyle, le n-butyle, l'isobutyle, le tert-butyle, le n-pentyle, l'isopentyle, le n-hexyle, le n-heptyle, le n-octyle, le n-nonyle et le n-décyle.

6. Procédé selon l'une quelconque des revendications précédentes, **caractérisé par le fait que** le squelette du polymère de formule (I) comporte exactement deux groupes amino, mercapto ou hydroxyle.

7. Procédé selon l'une des revendications 1 à 5, **caractérisé par le fait que** le squelette du polymère de la formule (I) comporte plus de deux groupes amino, mercapto ou hydroxyle.

8. Procédé selon la revendication 7, **caractérisé par le fait qu'**essentiellement chaque unité monomère du squelette du polymère possède une chaîne latérale avec un groupe amino, mercapto ou hydroxyle.

9. Procédé selon l'une quelconque des revendications précédentes, **caractérisé par le fait que** le squelette du polymère A est choisi dans le groupe constitué par les polyéthers, les polyalcools, les polyoléfines, les polyesters, les polycarbonates, les polyamines, les polyamides, les polyacrylates, les polysulfures, les polysiloxanes, les polyacétals et leurs copolymères.

10. Procédé selon la revendication 9, **caractérisé par le fait que** le squelette du polymère A est un polypropylène glycol ou un polyester, de préférence un poly (3-méthyl-1,5-pentanediol adipate).

11. Procédé selon l'une quelconque des revendications précédentes, **caractérisé en ce que** le prépolymère (III) est mis à réagir dans une étape supplémentaire avec
(A) un aminoalcoxysilane ou un mercaptoalcoxysilane, éventuellement en présence d'un second catalyseur (II) ou
(B) une diamine, une triamine, un dithiol ou un trithiol pour donner un prépolymère modifié et
est ensuite mis en réaction avec un composé d'alcoxysilane comportant un groupe époxy, ce qui donne un polymère d'alcoxysilane.

12. Procédé selon la revendication 11, dans lequel le prépolymère réagit avec un alcool ou un alcool activé avant les étapes de réaction selon la variante (A) ou la variante (B), l'alcool activé étant de préférence le carbonate de glycérol.

13. Procédé selon l'une des revendications 11 et 12, dans lequel, dans la variante (A), l'aminoalcoxysilane est choisi dans le groupe comprenant le 3-aminopropyltriméthoxysilane, le 3-aminopropyltriéthoxysilane, N-(n-butyl)-3-aminopropyltriméthoxysilane, N-(n-butyl)-3-aminopropylméthyldiméthoxysilane, N-(n-butyl)-3-aminopropyltriéthoxysilane, N-éthylaminoisobutyltriméthoxysilane, N-éthylaminoisobutylméthyldiméthoxysilane, 3-piperazinopropyltriméthoxysilane, 3-piperazinopropylméthyldiméthoxysilane, 3-piperazinopropyltriéthoxysilane, N-(2-aminoéthyl)-3-aminopropyltriméthoxysilane, N-(2-aminoéthyl)-3-aminopropyltriéthoxysilane, N-(2-aminoéthyl)-3-aminopropylméthyldiméthoxysilane et un produit de réaction équimolaire de pipérazine et de glycidoxypropyltriméthoxysilane et le mercaptoalkoxysilane est choisi dans le groupe comprenant le 3-mercaptopropyltriméthoxysilane, le 3-mercaptopropyltriéthoxysilane, le 3-mercaptopropylméthyldiméthoxysilane et le 3-mercaptopropyltriméthoxysilane.
